(19) **Europäisches Patentamt / European Patent Office / Office européen des brevets**

(11) **EP 3 315 950 A1**

(12) **EUROPEAN PATENT APPLICATION**
published in accordance with Art. 153(4) EPC

(43) Date of publication:
02.05.2018 Bulletin 2018/18

(21) Application number: 16814376.6

(22) Date of filing: 22.06.2016

(51) Int Cl.:
*G01N 21/892* (2006.01)

(86) International application number:
PCT/JP2016/068459

(87) International publication number:
WO 2016/208606 (29.12.2016 Gazette 2016/52)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 25.06.2015 JP 2015127714
25.06.2015 JP 2015127743

(71) Applicant: JFE Steel Corporation
Tokyo 100-0011 (JP)

(72) Inventors:
• ONO, Hiroaki
Tokyo 100-0011 (JP)
• TATE, Masami
Tokyo 100-0011 (JP)
• OSHIGE, Takahiko
Tokyo 100-0011 (JP)
• KODAMA, Toshifumi
Tokyo 100-0011 (JP)
• KOSHIHARA, Takahiro
Tokyo 100-0011 (JP)
• OGAWA, Akihiro
Tokyo 100-0011 (JP)
• IIZUKA, Yukinori
Tokyo 100-0011 (JP)

(74) Representative: Haseltine Lake LLP
Bürkleinstrasse 10
80538 München (DE)

(54) **SURFACE FLAW DETECTION DEVICE, SURFACE FLAW DETECTION METHOD, AND MANUFACTURING METHOD FOR STEEL MATERIAL**

(57) A surface defect detection device according to the present invention is a surface defect detection device that optically detects a surface defect of a steel product, and is characterized by including an irradiation unit configured to irradiate the same inspection target portion with illumination light beams from different directions using two or more distinguishable light sources and a detection unit configured to acquire images formed by reflected light beams of the respective illumination light beams, and to detect the surface defect in the inspection target portion by performing difference processing between the acquired images, and is characterized in that an optical system satisfies a predetermined condition. Due to this, scale or harmless patterns can be accurately distinguished from the surface defect.

FIG.4

**Description**

Field

The present invention relates to a surface defect detection device and a surface defect detection method that optically detect surface defects of a steel product, and to a method for manufacturing a steel product, the method detecting surface defects of the steel product using the surface defect detection method, and manufacturing the steel product on the basis of the detection results.

Background

In recent years, from the viewpoint of improving yield by preventing mass incompatibility, it is desired that, in manufacturing processes of steel products, surface defects of a steel product are detected in hot or cold conditions. The term "steel product" as used herein refers to an article of iron or steel, such a steel sheet or a shaped steel, including, for example, a seamless steel pipe, a welded steel pipe, a hot-rolled steel sheet, a cold-rolled steel sheet, and a thick plate, and to a semifinished product, such as a slab, produced in the process of manufacturing the article of iron or steel. For this reason, as a method for detecting the surface defects of the steel product, a method has been developed in which a billet in the manufacturing process of a seamless steel pipe is irradiated with light, light reflected therefrom is received, and a determination is made on the basis of the light quantity of the reflected light as to whether a surface defect is present (refer to Patent Literature 1). A method has also been developed in which visible light beams in a plurality of wavelength regions that neither affect nor are affected by self-emitting light emitted from a hot steel product and do not affect each other are emitted from mutually symmetrical directions oblique to a normal line to the surface of the hot steel product, an image formed by combined reflected light beams and images formed by the individual reflected light beams are obtained in the normal direction to the surface of the hot steel product, and a surface defect of the hot steel product is detected from a combination of these images (refer to Patent Literature 2).

Citation List

Patent Literature

    Patent Literature 1: Japanese Laid-open Patent Publication No. 11-037949
    Patent Literature 2: Japanese Laid-open Patent Publication No. 59-052735

Summary

Technical Problem

According to the method described in Patent Literature 1, since harmless patterns and scale have different reflectance from that of a base steel portion, the sound harmless patterns or scale may be erroneously detected as the surface defects. For this reason, in the method described in Patent Literature 1, the billet is distinguished from the scale using the fact that the shape of the billet is linear. However, the surface defects of a steel product have not only linear shapes, but also various shapes, such as circular shapes. Therefore, the method described in Patent Literature 1 is difficult to be applied to the detection processing for the surface defects of the steel product. In the method described in Patent Literature 2, since a large number of types of surface defects, scale, harmless patterns and the like are present, simply combining the images is difficult to distinguish the surface defects from the scale or the harmless patterns.
In addition, detection logic for dealing with a combination of a large number of images is realistically difficult to be established.
The present invention has been made in view of the above described problems, and an object thereof is to provide a surface defect detection device and a surface defect detection method that enable accurate distinction of the scale or the harmless patterns from the surface defects. Another object of the present invention is to provide a method for manufacturing a steel product, the method enabling the accurate distinction of the scale or the harmless patterns from the surface defects, and enabling manufacturing of the steel product on the basis of the distinction result.

Solution to Problem

To solve the problem and achieve the object, a surface defect detection device to optically detect a surface defect of a steel product according to the present invention includes: an irradiation unit configured to irradiate a same inspection target portion with illumination light beams from different directions using two or more distinguishable light sources; and a detection unit configured to acquire images formed by reflected light beams of the respective illumination light beams, and to detect the surface defect in the inspection target portion by performing difference processing between the acquired images, wherein a vector $a_1$, a vector $b_1$, a vector $a_2$, and a vector $b_2$ satisfy Expression (1) given below in the inspection target portion:

$$\left| \arccos\left( \frac{\langle \mathbf{a}_1 \cdot \mathbf{b}_1 \rangle}{\|\mathbf{a}_1\|\|\mathbf{b}_1\|} \right) - \arccos\left( \frac{\langle \mathbf{a}_2 \cdot \mathbf{b}_2 \rangle}{\|\mathbf{a}_2\|\|\mathbf{b}_2\|} \right) \right| \leq 22^\circ \qquad (1)$$

where $\langle \rangle$ represents an inner product, $\| \|$ represents a norm,
$a_1$ denotes a vector representing a specular reflection direction of an illumination light beam incident from one light source of two light sources into the inspection target portion, $b_1$ denotes a vector in the inspection target portion representing a reflection direction of the illumination light beam incident from the one light source toward a photographing unit configured to photograph the images, $a_2$ denotes a vector representing a specular reflection direction of an illumination light beam incident from the other light source of the two light sources into the inspection target portion, and $b_2$ denotes a vector in the inspection target portion representing a reflection direction of the illumination light beam incident from the other light source toward the photographing unit configured to photograph the images.

Moreover, in the surface defect detection device according to the present invention, an irradiation direction of one illumination light beam of the illumination light beams emitted from the two light sources is parallel to a longitudinal direction of the steel product.

Moreover, a surface defect detection method to optically detect a surface defect of a steel product according to the present invention includes: an irradiation step of irradiating a same inspection target portion with illumination light beams from different directions using two or more distinguishable light sources; and a detection step of acquiring images formed by reflected light beams of the respective illumination light beams, and detecting the surface defect in the inspection target portion by performing difference processing between the acquired images, wherein a vector $a_1$, a vector $b_1$, a vector $a_2$, and a vector $b_2$ satisfy Expression (1) given below in the inspection target portion:

$$\left| \arccos\left( \frac{\langle \mathbf{a}_1 \cdot \mathbf{b}_1 \rangle}{\|\mathbf{a}_1\|\|\mathbf{b}_1\|} \right) - \arccos\left( \frac{\langle \mathbf{a}_2 \cdot \mathbf{b}_2 \rangle}{\|\mathbf{a}_2\|\|\mathbf{b}_2\|} \right) \right| \leq 22^\circ \qquad (1)$$

where $\langle \rangle$ represents an inner product, $\| \|$ represents a norm,
$a_1$ denotes a vector representing a specular reflection direction of an illumination light beam incident from one light source of two light sources into the inspection target portion, $b_1$ denotes a vector in the inspection target portion representing a reflection direction of the illumination light beam incident from the one light source toward a photographing unit configured to photograph the images, $a_2$ denotes a vector representing a specular reflection direction of an illumination light beam incident from the other light source of the two light sources into the inspection target portion, and $b_2$ denotes a vector in the inspection target portion representing a reflection direction of the illumination light beam incident from the other light source toward the photographing unit configured to photograph the images.

Moreover, in the surface defect detection method according to the present invention, an irradiation direction of one illumination light beam of the illumination light beams emitted from the two light sources is parallel to a longitudinal direction of the steel product.

Moreover, in the surface defect detection method according to the present invention, the irradiation step includes a step of emitting the illumination light beams by repeatedly emitting light from two or more flash light sources such that light emitting times of the flash light sources do not overlap each other, and/or a step of simultaneously emitting illumination light beams of two or more light sources having wavelength ranges not overlapping one another, and in the case of simultaneously emitting the illumination light beams of the two or more light sources having wavelength ranges not overlapping one another, the detection step includes a step of acquiring the images formed by the reflected light beams of the respective illumination light beams by separating the reflected light beams of the respective mixed illumination light beams using filters configured to transmit light beams having the same wavelengths as wavelengths of the illumination light beams.

Moreover, in the surface defect detection method according to the present invention, the detection step includes a first determination step of extracting a bright portion and a dark portion of an image obtained by performing the difference processing between the acquired images, and determining presence or absence of a concavo-convex surface defect based on a positional relation between the bright portion and the dark portion thus extracted and irradiation directions of the illumination light beams.

Moreover, a method for manufacturing a steel product according to the present invention includes: a step of detecting a surface defect of the steel product using the surface defect detection method according to the present invention; and manufacturing the steel product based on a result of the detection.

Advantageous Effects of Invention

A surface defect detection device and a surface defect detection method according to the present invention can accurately distinguish scale or harmless patterns from surface defects. A method for manufacturing a steel product according to the present invention enables the accurate distinction of the scale or the harmless patterns from the surface defects, and enables manufacturing of the steel product on the basis of the distinction result.

Brief Description of Drawings

FIG. 1 is a schematic diagram illustrating a configuration of a surface defect detection device serving as a first embodiment of the present invention.
FIG. 2 is a schematic diagram illustrating a configuration of a modification of area sensors illustrated in FIG. 1.
FIG. 3 is a timing diagram illustrating drive timing of light sources and the area sensors illustrated in FIG. 1.
FIG. 4 is a diagram illustrating examples of two two-dimensional images obtained by photographing a surface defect and scale and a harmless pattern, and a difference image therebetween.
FIG. 5 is a schematic diagram illustrating a configuration of a device used in an experiment for investigating a relation between an angle of incidence of illumination light and reflectance of a sound portion (base steel portion).
FIG. 6 is a diagram illustrating a relation between an angle of incidence of laser and a light quantity received by a power meter.
FIG. 7 is a schematic diagram for explaining surface defect detection processing serving as a second mode of the present invention.
FIG. 8 is a schematic diagram for explaining surface defect detection processing serving as a third mode of the present invention.
FIG. 9 is a schematic diagram illustrating a configuration of a device used in an example.
FIG. 10 is a diagram illustrating results of surface defect detection processing of the example.
FIG. 11 is a diagram illustrating results of surface defect detection processing for a steel pipe portion where scale has been generated.
FIG. 12 is a schematic diagram illustrating a configuration of a modification of the surface defect detection device serving as the first embodiment of the present invention.
FIG. 13 is a schematic diagram illustrating a configuration of another modification of the surface defect detection device serving as the first embodiment of the present invention.
FIG. 14 depicts diagrams illustrating shades and shadows when the illumination light is emitted from either side in cases where the surface shape of an inspection target portion is concave and convex.
FIG. 15 is a diagram illustrating an example of a difference image of a concave surface defect.
FIG. 16 is a flowchart illustrating a flow of a method for calculating a positional relation between a bright portion and a dark portion using expansion processing.
FIGS. 17(a) and 17(b) are diagrams illustrating an example of a difference image and a one-dimensional profile of a brightness pattern thereof.
FIGS. 18(a) and 18(b) are diagrams illustrating an example of a two-dimensional image and a one-dimensional profile of a filter.
FIGS. 19(a) and 19(b) are diagrams illustrating an example of a difference image having been subjected to filtering using the filter illustrated in FIGS. 18(a) and 18(b), and a one-dimensional profile thereof.
FIG. 20 is a schematic diagram illustrating a modification of arrangement positions of the light sources.
FIG. 21 depicts schematic diagrams illustrating brightness patterns obtained according to the arrangement positions of the light sources illustrated in FIG. 20.
FIG. 22 is a diagram illustrating results of surface defect detection processing of an example.
FIG. 23 is a diagram illustrating a difference image of a dent flaw.
FIGS. 24(a) and 24(b) are diagrams illustrating difference images of a roll mark when the illumination light is emitted from the width direction and the longitudinal direction of a thick steel plate.
FIGS. 25(a) and 25(b) are diagrams illustrating inclinations of a surface defect when the illumination light is emitted from the width direction and the longitudinal direction of the thick steel plate.

FIG. 26 is a diagram illustrating an inclination of a sound portion when the illumination light is emitted from the width direction of the thick steel plate.

FIG. 27 is a diagram illustrating a configuration of a two-dimensional model of an optical system.

FIG. 28 is a diagram illustrating a fitting result of an image profile to a theoretical curve.

FIG. 29 is a diagram illustrating a configuration of the optical system.

FIG. 30 is a diagram illustrating changes in signal strength with a change in slope angle of a surface defect when the angle of incidence of the illumination light is 45°, 60°, and 75°.

FIGS. 31(a) and 31(b) are diagrams illustrating reflection models of the illumination light on a sound portion surface and a highly diffusive surface.

FIGS. 32(a) to 32(c) are diagrams illustrating difference images of a surface defect portion.

FIGS. 33(a) and 33(b) are diagrams illustrating images obtained when the illumination light is emitted from a right side direction and a left side direction to a thick steel plate with a surface without concavity and convexity to which highly diffusive scale is attached.

FIGS. 34(a) to 34(c) are diagrams illustrating an image obtained when the illumination light is emitted from the right side direction, an image obtained when the illumination light is emitted from the left side direction, and a difference image therebetween.

FIG. 35 is a diagram illustrating a configuration of an optical system.

FIG. 36 is a diagram illustrating a change in difference image with a change in angle of incidence of the illumination light.

FIG. 37 is a diagram illustrating standard deviations of noise signal strengths in longitudinal positions before moving average filtering is applied.

FIG. 38 is a diagram illustrating the standard deviations of the noise signal strengths in the longitudinal positions after the moving average filtering is applied.

FIG. 39 is a diagram illustrating relations of the angle of incidence of the illumination light with light emission/reception differences on the near side and the far side.

FIG. 40 is a diagram illustrating a relation between the angle of incidence of the illumination light and the absolute value of the difference between the light emission/reception difference on the near side and the light emission/reception difference on the far side.

FIG. 41 is a diagram illustrating a configuration of an optical system.

FIG. 42 depicts diagrams illustrating a detection result of a surface defect.

FIGS. 43(a) to 43(c) are diagrams illustrating detection results of a burr-pressed mark.

FIG. 44 is a diagram illustrating a result of inspection of a surface defect obtained by reducing the field of view in only the longitudinal direction of a thick steel plate.

Description of Embodiments

The following describes configurations and operations of surface defect detection devices serving as first to third embodiments of the present invention with reference to the drawings.

(First embodiment)

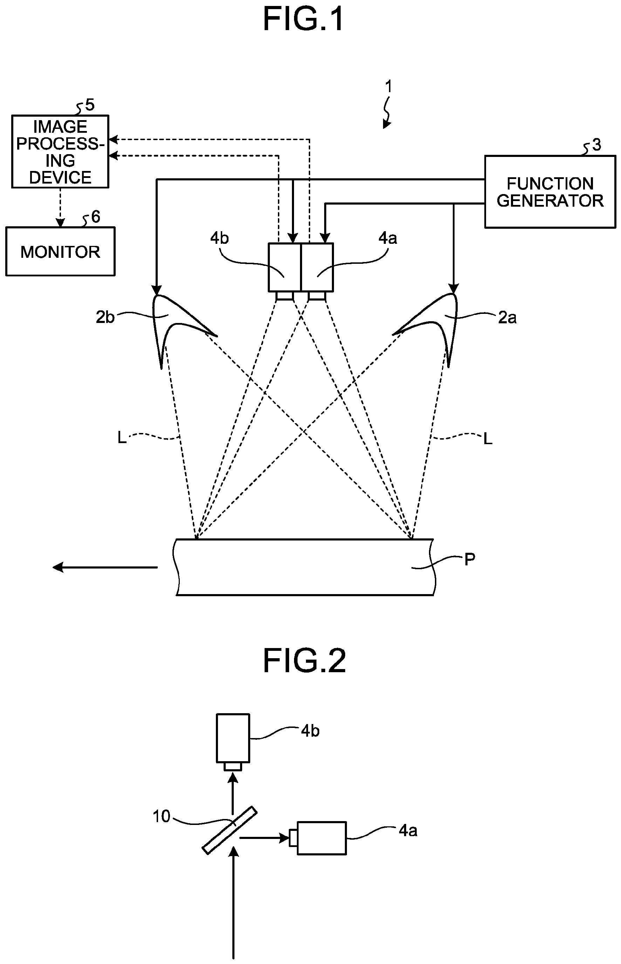

First, the configuration and operations of a surface defect detection device serving as the first embodiment of the present invention will be described with reference to FIGS. 1 to 13.

<Configuration of surface defect detection device>

FIG. 1 is a schematic diagram illustrating the configuration of the surface defect detection device serving as the first embodiment of the present invention. As illustrated in FIG. 1, this surface defect detection device 1 serving as the first embodiment of the present invention is a device that detects a surface defect of a cylindrical steel pipe P conveyed in the direction of the arrow in FIG. 1, and includes, as main components, light sources 2a and 2b, a function generator 3, area sensors 4a and 4b, an image processing device 5, and a monitor 6.

The light sources 2a and 2b emit distinguishable illumination light beams L to the same inspection target portion on a surface of the steel pipe P according to trigger signals from the function generator 3. The light sources 2a and 2b are preferably symmetrically arranged with respect to the inspection target portion. Accordingly, the light sources 2a and 2b are arranged so as to be displaced by the same angle from a vector normal to the surface of the steel pipe P, and such that irradiation direction vectors of the illumination light beams L and the vector normal to the surface of the steel pipe P lie in the same plane. The purpose of the sameness of angles of incidence as mentioned herein is to make optical conditions as equal as possible when the light sources oriented in the different directions sources are distinguished from each other, and to greatly reduce a signal of a sound portion including scale and a harmless pattern by performing difference processing. The signal of the sound portion greatly depends on surface characteristics of the target, and thus, the sameness is difficult to be unconditionally guaranteed by a constant angle. Therefore, if a condition allows inspection, the angles are expressed as the same angle as long as the signal of the sound portion can be reduced by the difference processing even if the angles differ from each other to a certain degree. The condition allowing inspection as mentioned herein refers to a condition that a specular reflection component can be sufficiently eliminated, and the angles of incidence may be increased as much as possible if the light quantity is sufficient. In the present embodiment, the number of the light sources is two, but the number of the light sources may be three or larger if the light sources are distinguishable from one another. The distinguishable light sources as mentioned herein refer to light sources, for each of which the reflected light quantity of a reflected light beam obtained from the target can be separately found.

The area sensors 4a and 4b photograph two-dimensional images formed by the reflected light beams of the illumination light beams L emitted from the light sources 2a and 2b according to the trigger signals from the function generator 3. The area sensors 4a and 4b enter data of the photographed two-dimensional images into the image processing device 5. The area sensors 4a and 4b are preferably arranged, if possible, on the normal vector of the inspection target portion in a state where imaging fields of view of the respective area sensors 4a and 4b are ensured.

To solve a positioning problem, the area sensors 4a and 4b are located as close as possible to each other, and optical axes thereof are preferably oriented as parallel as possible to each other. As illustrated in FIG. 2, the optical axes of the area sensors 4a and 4b may be adjusted to be coaxial using any of a semitransparent mirror 10, a beam splitter, and a prism. Due to this, a difference image to be described later can be accurately acquired.

The image processing device 5 is a device that detects a surface defect in the inspection target portion by performing the difference processing (to be described later) between the two two-dimensional images received from the area sensors 4a and 4b. The image processing device 5 outputs the two-dimensional images received from the area sensors 4a and 4b and information on a detection result of the surface defect to the monitor 6.

The surface defect detection device 1 having the configuration described above distinguishes the scale or the harmless pattern from the surface defect in the inspection target portion by performing surface defect detection processing to be described below. The surface defect as mentioned herein refers to a concavo-convex defect. The scale or the harmless pattern refers to a portion having a surface film or surface characteristics with optical characteristics different from those of a base steel portion with a thickness of roughly several micrometers to several tens of micrometers, and is a portion causing noise in the surface defect detection processing. The following describes surface defect detection processing serving as first to third modes of the present invention.

<First mode>

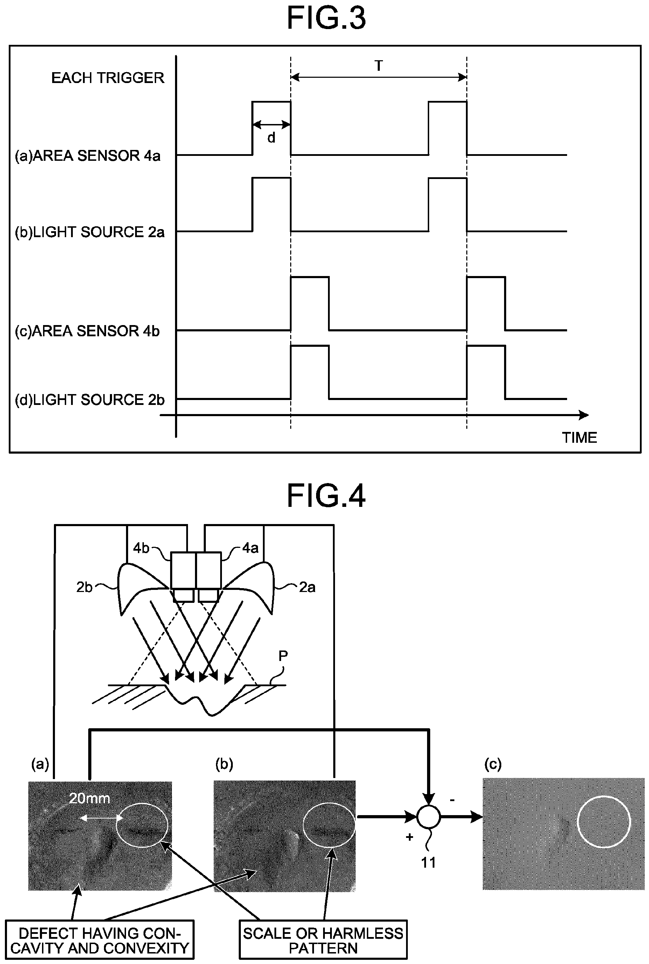

First, the surface defect detection processing serving as the first mode of the present invention will be described with reference to FIGS. 3 to 6.

FIG. 3 is a timing diagram illustrating drive timing of the light sources 2a and 2b and the area sensors 4a and 4b. In FIG. 3, d denotes a light-emitting time of the light sources 2a and 2b, and T denotes a photographing period of the two-dimensional images photographed by the area sensors 4a and 4b. In the surface defect detection processing serving as the first mode of the present invention, the light sources 2a and 2b are distinguished from each other by using the light sources 2a and 2b as flash light sources, and by repeatedly emitting light from the flash light sources such that the light emitting times of the flash light sources do not overlap each other.

That is, as illustrated in FIG. 3, in the present mode, first, the function generator 3 transmits a trigger signal to the light source 2a and the area sensor 4a, the light source 2a emits one of the illumination light beams L, and the area sensor 4a completes the photographing of a two-dimensional image within the time d. After the area sensor 4a has completed the photographing of the two-dimensional image, the function generator 3 transmits a trigger signal to the light source 2b and the area sensor 4b, and a two-dimensional image is photographed in the same manner. According to present mode, the two-dimensional images formed by the individual reflected light beams corresponding to the illumination light beams L emitted from the respective light sources can be photographed with the time difference d without a reduction in light quantity.

If the conveyance speed of the steel pipe P is high, the light-emitting time d of the flash light sources is preferably short. This is because reducing the light-emitting time d reduces a shutter delay between the two two-dimensional images obtained by the area sensors 4a and 4b, and reduces a positional displacement between the two-dimensional images caused by the shutter delay. In order to detect the surface defect using the difference image between the two-dimensional images formed by the individual reflected light beams, the light-emitting time d of the flash light sources needs to satisfy a condition represented by Expression (2) below.

$$Light - emitting\ time\ d\ (s) \leq$$
$$minimum\ resolution\ (mm/pixel) \times$$
$$allowable\ positional\ displacement\ (pixels)/$$
$$line\ conveyance\ speed\ (mm/s)$$

(2)

If the size of a surface defect to be detected is, for example, 20 mm, signals of at least $5 \times 5$ pixels are empirically required for detecting the surface defect. Therefore, only a resolution of 4 mm/pixel is needed. In this case, the allowable amount of the positional displacement caused by the light emission timing of the illumination light beams L empirically needs to be within 0.2 pixels. Therefore, if the conveyance speed of the steel pipe P is 1 m/s, 3 m/s, or 5 m/s, the light-emitting time of the light sources 2a and 2b needs to be equal to or shorter than 800 $\mu$s, 270 $\mu$s, or 160 $\mu$s, respectively. If the conveyance speed and the conveyance direction of the steel pipe P are constant, this positional displacement can be corrected after the two-dimensional images are photographed.

In the present mode, after applying image processing, such as calibration, shading correction, and denoising, to the two-dimensional images received from the area sensors 4a and 4b using camera parameters derived in advance, the image processing device 5 detects the surface defect in the inspection target portion by performing the difference processing between the two-dimensional images.

Specifically, letting Ia(x,y) denote a luminance value of each pixel constituting a two-dimensional image Ia obtained when the illumination light beams L is emitted from the light source 2a (where the number of pixels is $X \times Y$, the x-coordinate satisfies $1 \leq x \leq X$, and the y-coordinate satisfies $1 \leq y \leq Y$), and Ib(x,y) denote a luminance value of each pixel constituting a two-dimensional image Ib obtained when the illumination light beam L is emitted from the light source 2b, a luminance value I_diff(x,y) of each pixel of a difference image I_diff therebetween is represented by Expression (3) given below.

$$I\_diff(x,\ y) = Ia(x,\ y) - Ib(x,\ y)$$

(3)

FIG. 4 illustrates examples of the two-dimensional images Ia and Ib obtained by photographing the surface defect, and the scale and the harmless pattern that are not defects, and the difference image I_diff therebetween, in (a), (b), and (c), respectively. As illustrated in (a), (b), and (c) in FIG. 4, in the sound portion, an angle formed between the normal vector and the light source 2a equals an angle formed between the normal vector and the light source 2b regardless of the scale or the harmless pattern, and consequently, the luminance value Ia(x,y) = the luminance value Ib(x,y), that is, the luminance value I_diff(x,y) = 0. In the surface defect portion, however, the surface has a concavo-convex shape. As a result, a portion is always present where the angle formed between the normal vector and the light source 2a does not equal the angle formed between the normal vector and the light source 2b, and consequently, the luminance value Ia(x,y) # the luminance value Ib(x,y), that is, the luminance value I_diff(x,y) # 0.

Consequently, by generating the difference image between the two two-dimensional images using a subtractor 11, the scale and the harmless pattern that are not defects are removed, and the surface defect alone can be detected. The surface defect alone is detected in this manner; a final evaluation is made on the basis of various feature quantities as to whether the surface defect is harmful; and the evaluation result is displayed on the monitor 6.

If a positional displacement is present between the two two-dimensional images which affects the difference image, a two-dimensional low pass filter is preferably used to reduce the influence of the positional displacement between the two-dimensional images. In this case, let H denote the two-dimensional low-pass filter, then a luminance value I'_diff(x,y) of the difference image is represented by Expression (4) given below.

$$I'\_diff(x,\ y) = H * (Ia(x,\ y) - Ib(x,\ y))$$

(4)

The light sources 2a and 2b preferably use the same light source, and each of the light sources preferably emits light so as to obtain light beams as uniform and parallel as possible. The inspection target portion is preferably approximately planar. However, even in an application to a case where the surface is somewhat nonuniform or to a smooth curved surface such as that of the steel pipe P, the surface defect can be detected through general shading correction.

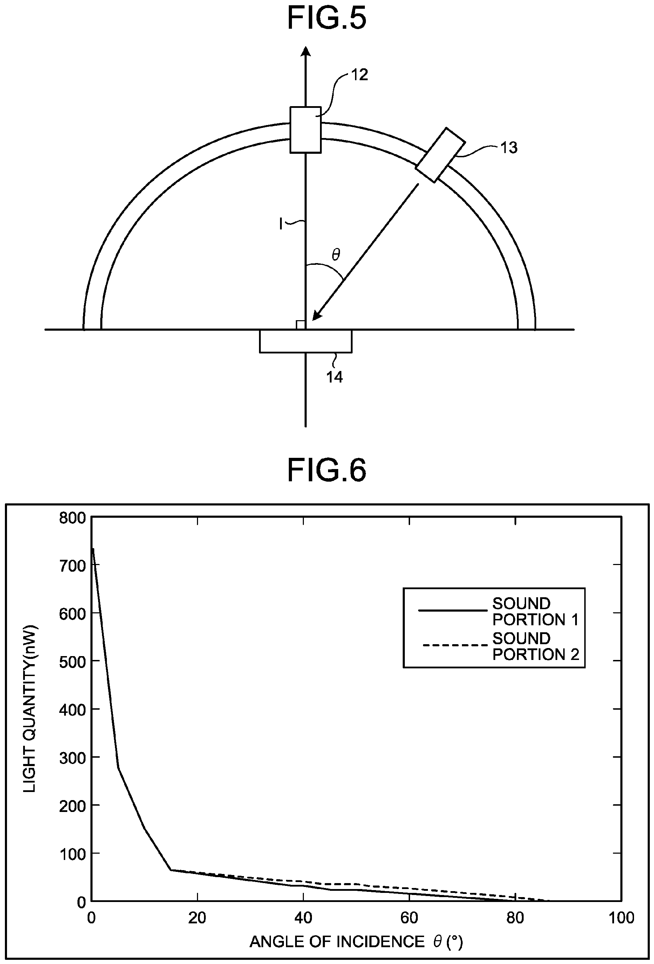

The angle of incidence of the illumination light beams L is preferably in a range preventing a specular reflection component from being included in reflected light from the sound portion and enabling ensuring of a sufficient light quantity. The inventors of the present invention conducted an experiment to investigate a relation between the angle of incidence of the illumination light beams L and reflectance of the sound portion (base steel portion). FIG. 5 illustrates the configuration of a device used in the experiment. As illustrated in FIG. 5, in this experiment, a power meter 12 was fixed in a position on a normal vector 1 of a target position on a surface of a slab sample 14. The light quantity received by the power meter 12 was measured while an angle of incidence θ of a laser 13 relative to the normal vector l was varied from 0° to 90°. FIG. 6 illustrates results of the experiment. As illustrated in FIG. 6, when the angle of incidence θ is in a range of 0° to 20°, the light quantity received by the power meter 12 is large due to inclusion of the specular reflection component, but, when the angle of incidence θ is 60° or larger, the light quantity received by the power meter 12 greatly drops. Therefore, the light quantity received can be increased by reducing the angle of incidence of the illumination light beams L unless any problem occurs in detectivity.

The resolution in the depth direction of the inspection target portion depends on the inclination angle of the defect and resolutions of the area sensors 4a and 4b. The inclination angle of the defect refers to an angle obtained by orthographically projecting "a normal vector of the defect portion" to "a plane formed by a normal vector of a sound portion surface of the inspection target portion and a light source direction vector", and by taking an angle formed between the orthographically projected vector and the normal vector of the sound portion surface. Although dependent on the surface characteristics of the inspection target portion, it has been found that, when incident light is emitted at an angle of incidence of, for example, 45°, a defect signal can be detected by performing the difference processing if the inclination angle of the defect is approximately 10° or larger. Therefore, if the resolution of one pixel is assumed to be 0.5 mm, a resolution in the depth direction of approximately $0.5 \times \tan 10° = 0.09$ mm is theoretically obtained.

<Second mode>

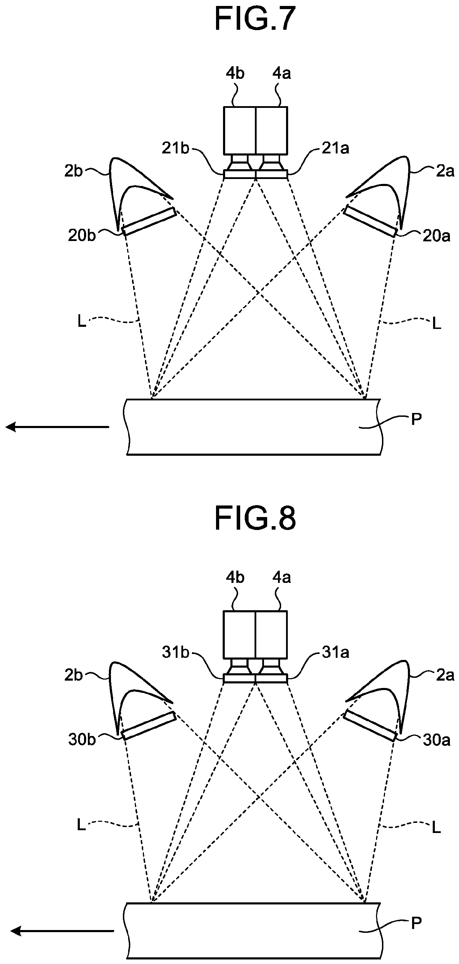

The following describes the surface defect detection processing serving as the second mode of the present invention with reference to FIG. 7.

In the surface defect detection processing serving as the second mode of the present invention, the light sources 2a and 2b are distinguished from each other by using light sources having wavelength ranges not overlapping each other as the light sources 2a and 2b. Specifically, as illustrated in FIG. 7, two types of wavelength selection filters 20a and 20b having wavelength ranges not overlapping each other are placed on the light sources 2a and 2b to select wavelength ranges of the illumination light beams L. Wavelength selection filters 21a and 21b having the same wavelength selection characteristics are placed on the area sensors 4a and 4b.

Such a configuration causes the reflected light beam of the illumination light beam L from the light source 2a to be received by only the area sensor 4a through the wavelength selection filters 20a and 21a, and causes the reflected light beam of the illumination light beam L from the light source 2b to be received by only the area sensor 4b through the wavelength selection filters 20b and 21b. Consequently, by matching the photographing timing of the area sensors 4a and 4b with each other, the two-dimensional images formed by the reflected light beams of the illumination light beams L from the light sources 2a and 2b can be photographed without any positional displacement. Processing after the two-dimensional images are photographed is the same as that of the first mode.

If the moving speed of the inspection target portion is high, to prevent the positional displacement caused by the movement of the inspection target portion, the light sources 2a and 2b may be used as the flash light sources, and photographing times of the two-dimensional images may be reduced without changing the light emission timing of the light sources 2a and 2b. A configuration may be employed in which a blue color transmitting filter is used as the wavelength selection filter 20a, a green color transmitting filter is used as the wavelength selection filter 20b, and the two-dimensional images are photographed using one color camera so that only the reflected light beam of the illumination light beam L from the light source 2a is received in the blue channel, and only the reflected light beam of the illumination light beam L from the light source 2b is received in the green channel.

<Third mode>

The following describes the surface defect detection processing serving as the third mode of the present invention with reference to FIG. 8.

In the surface defect detection processing serving as the third mode of the present invention, the light sources 2a and 2b are distinguished from each other by using mutually orthogonal linear polarization characteristics as the light sources 2a and 2b. Specifically, as illustrated in FIG. 8, linear polarizing plates 30a and 30b are placed at γ° and (γ + 90)° (where γ is any angle) on the light sources 2a and 2b, respectively, and only light of mutually orthogonal polarization components is transmitted therethrough. A linear polarizing plate refers to a filter that transmits only a linear polarization component in a certain direction with respect to incident light. Linear polarizing plates 31a and 31b having the same linear polarization characteristics as those of the linear polarizing plates 30a and 30b are placed at γ° and (γ + 90)° on the area sensors 4a and 4b.

Such a configuration causes the reflected light beam of the illumination light beam L from the light source 2a to be received by only the area sensor 4a, and causes the reflected light beam of the illumination light beam L from the light source 2b to be received by only the area sensor 4b. Consequently, by matching the photographing timing of the area sensors 4a and 4b with each other, the two-dimensional images formed by the reflected light beams of the illumination light beams from the respective light sources can be photographed without any positional displacement.

If the moving speed of the inspection target portion is high, the light sources 2a and 2b may be used as the flash light sources, and the photographing times of the two-dimensional images may be reduced without changing the light emission timing of the light sources 2a and 2b. Hereinafter, positioning and processing after the two-dimensional images are photographed are the same as those of the first and second modes.

[Example]

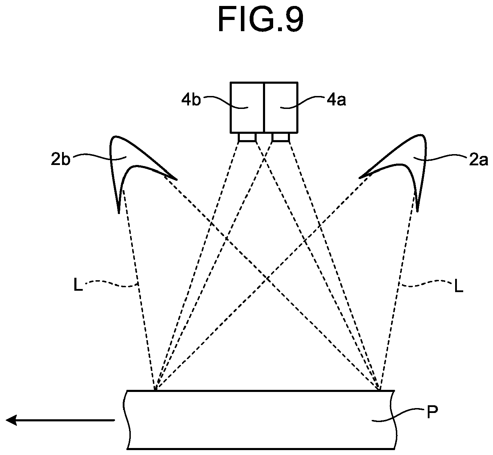

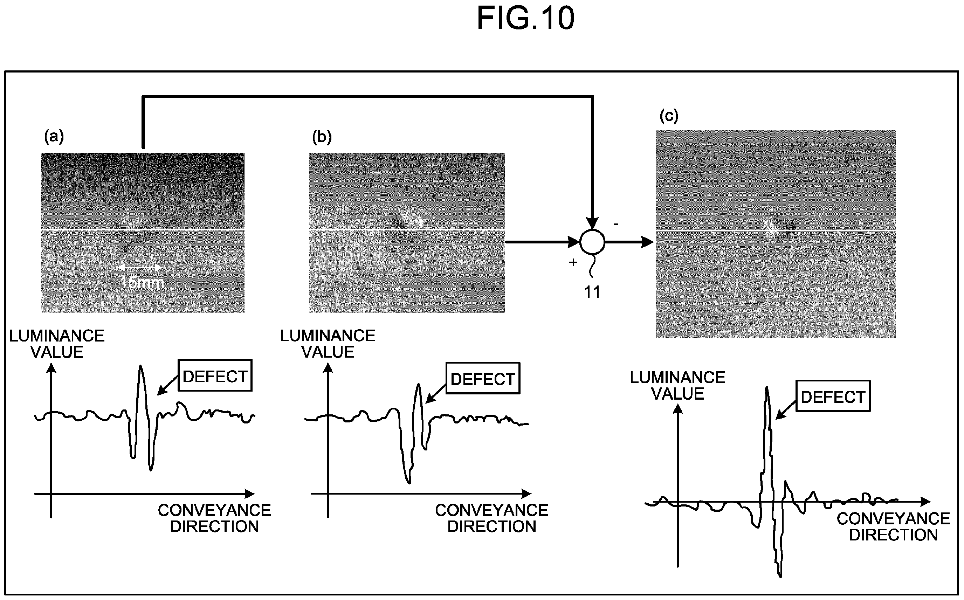

In this example, as illustrated in FIG. 9, the surface defect of the steel pipe P was detected using a method of using the flash light sources as the light sources 2a and 2b and changing the light emitting times of the light sources 2a and 2b. The two-dimensional images were photographed by arranging the area sensors 4a and 4b in parallel, and the positioning was performed by the image processing. FIG. 10 illustrates results of the surface defect detection processing. Part (a) in FIG. 10 illustrates a two-dimensional image obtained when the illumination light beam L is emitted from the light source 2a; part (b) in FIG. 10 illustrates a two-dimensional image obtained when the illumination light beam L is emitted from the light source 2b; and part (c) in FIG. 10 illustrates a difference image between the two-dimensional image illustrated in part (a) of FIG. 10 and the two-dimensional image illustrated in part (b) of FIG. 10. Signal-to-noise (S/N) ratios of the images illustrated in parts (a) to (c) of FIG. 10 were 3.5, 3.5, and 6.0, in that order. Thus, the S/N ratio of the difference image was improved from those in the cases in each of which the illumination light beam L was simply emitted from one direction.

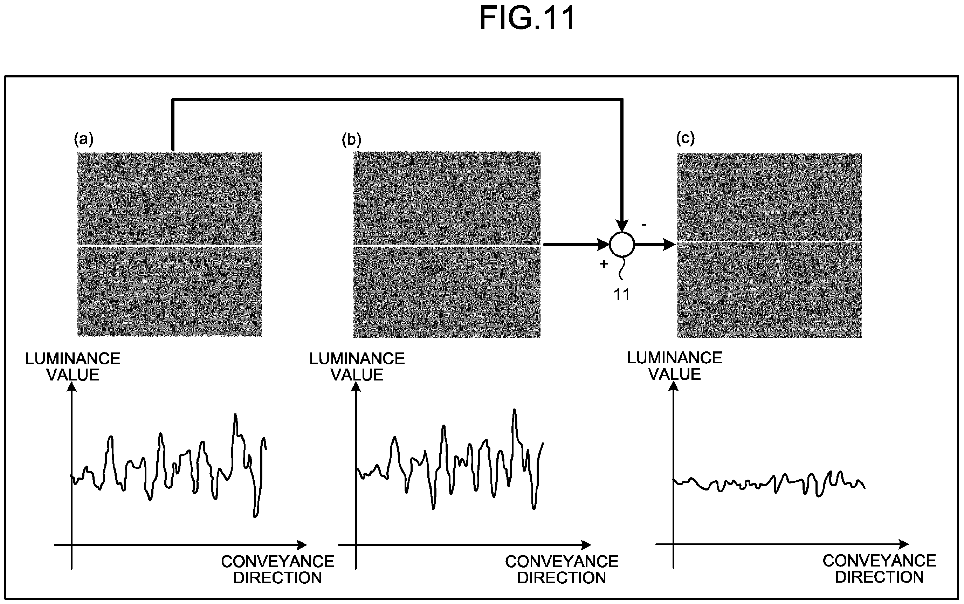

FIG. 11 is a diagram illustrating results of the surface defect detection processing for a steel pipe portion where scale has been generated. Part (a) in FIG. 11 illustrates a two-dimensional image obtained when the illumination light beam L is emitted from the light source 2a; part (b) in FIG. 11 illustrates a two-dimensional image obtained when the illumination light beam L is emitted from the light source 2b; and part (c) in FIG. 11 illustrates a difference image between the two-dimensional image illustrated in part (a) of FIG. 11 and the two-dimensional image illustrated in part (b) of FIG. 11. Black spots spreading over the whole two-dimensional images illustrated in parts (a) and (b) in FIG. 11 are the scale serving as noise. Since the scale had a flat shape, the image of the scale was removed by acquiring the difference image. In the difference image, the signal of the scale serving as the noise was reduced to a quarter of a case where the illumination light beam L was simply emitted from one direction.

[Modification 1]

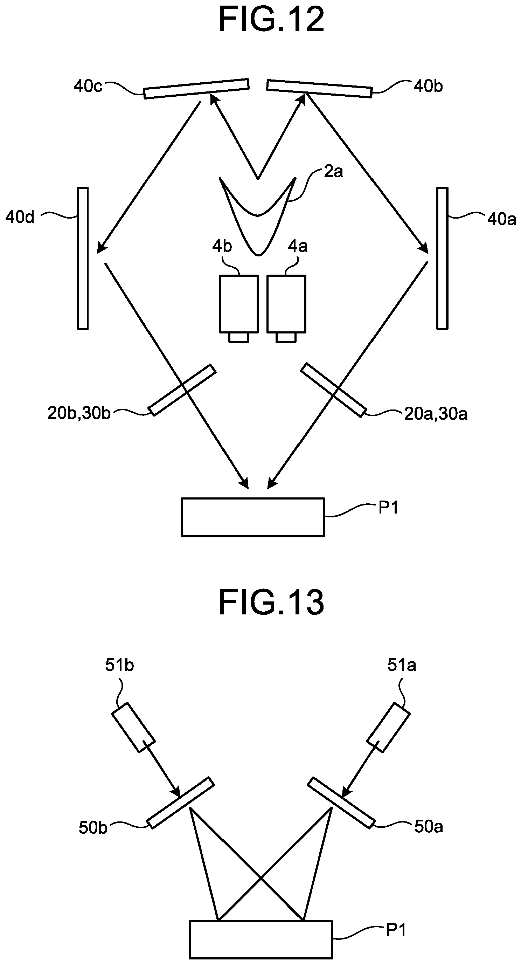

FIG. 12 is a schematic diagram illustrating the configuration of a modification of the surface defect detection device serving as the first embodiment of the present invention. As illustrated in FIG. 12, in the present modification, illumination light emitted from the single light source 2a is divided by a plurality of mirrors 40a, 40b, 40c, and 40d, and an inspection target portion of a steel pipe P1 is finally irradiated with the illumination light from two directions. In this case, the same effect as that of the second and third modes can be obtained by arranging the wavelength selection filters 20a and 20b and the linear polarizing plates 30a and 30b on respective optical paths of the illumination light. Although the illumination light is emitted from two directions in the present modification, the same applies to a case where illumination light is emitted from three or more directions.

[Modification 2]

FIG. 13 is a schematic diagram illustrating the configuration of another modification of the surface defect detection device serving as the first embodiment of the present invention. As illustrated in FIG. 13, in the present modification, instead of limiting the wavelengths of the light sources using the wavelength selection filters 20a and 20b in the surface defect detection device illustrated in FIG. 7, the wavelengths of light sources are limited using pulse lasers 51a and 51b and diffusion plates 50a and 50b. In the present modification, the light sources are distinguished from each other by irradiating the inspection target portion from the right and left directions thereof with laser beams from the two pulse lasers 51a and 51b having wavelength ranges different from each other. To irradiate the entire area of the inspection target portion with the laser beams from the pulse lasers 51a and 51b at this time, the diffusion plates 50a and 50b are inserted in optical paths of the laser beams. Although the illumination light is emitted from two directions in the present modification, the same applies to a case where illumination light is emitted from three or more directions.

[Modification 3]

In the present modification, a dichroic mirror is used instead of the wavelength selection filters 21a and 21b placed on the area sensors 4a and 4b in the surface defect detection device illustrated in FIG. 7. The dichroic mirror refers to a mirror that reflects light having a particular wavelength component and transmits light having the other wavelength components. Using the dichroic mirror eliminates the necessity of the wavelength selection filters. Although the illumination light is emitted from two directions in the present modification, the same applies to a case where illumination light is emitted from three or more directions.

(Second embodiment)

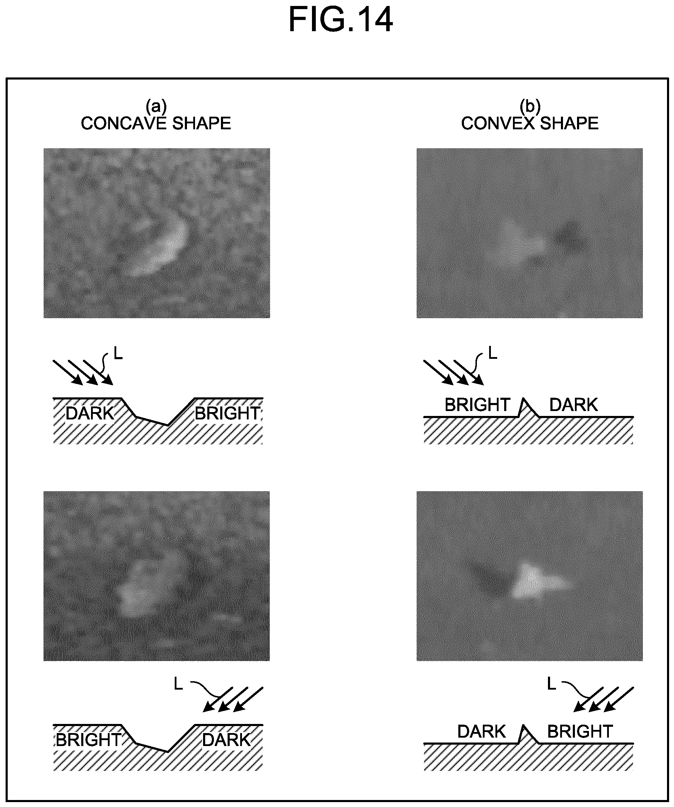

The following describes the configuration and operations of a surface defect detection device serving as the second embodiment of the present invention with reference to FIGS. 14 to 22. The configuration of the surface defect detection device of the present embodiment is the same as the configuration of the surface defect detection device of the above described first embodiment. Thus, the following omits the description of the configuration, and describes only the operations of the surface defect detection device.

The surface defect detection device 1 serving as the second embodiment of the present invention distinguishes scale or a harmless pattern from a concavo-convex surface defect in the inspection target portion by performing surface defect detection processing to be described below. The scale or the harmless pattern refers to a portion having a surface film or surface characteristics with optical characteristics different from those of a base steel portion with a thickness of roughly several micrometers to several tens of micrometers, and is a portion causing noise in the surface defect detection processing.

<Surface defect detection processing>

In the surface defect detection processing serving as the second embodiment of the present invention, after applying image processing, such as calibration, shading correction, and denoising, to the two two-dimensional images received from the area sensors 4a and 4b using the camera parameters derived in advance, the image processing device 5 generates the difference image by performing difference processing between the two-dimensional images, and detects the concavo-convex surface defect in the inspection target portion from the generated difference image.

Specifically, let $Ia(x,y)$ denote a luminance value of each pixel constituting the two-dimensional image $Ia$ obtained when the illumination light beams L is emitted from the light source 2a (where the number of pixels is $X \times Y$, the x-coordinate satisfies $1 \leq x \leq X$, and the $\gamma$-coordinate satisfies $1 \leq y \leq Y$), and $Ib(x,y)$ denote a luminance value of each pixel constituting the two-dimensional image $Ib$ obtained when the illumination light beam L is emitted from the light source 2b, then the luminance value $I\_diff(x,y)$ of each pixel of the difference image $I\_diff$ obtained by the difference processing is represented by Expression (3), which is already given.

As illustrated in FIG. 4, in the sound portion, the angle formed between the normal vector of the surface and the light source 2a equals the angle formed between the normal vector of the surface and the light source 2b regardless of presence or absence of the scale or the harmless pattern, and consequently, the luminance value $Ia(x,y)$ = the luminance value $Ib(x,y)$, that is, the luminance value $I\_diff(x,y) = 0$. In a concavo-convex surface defect portion, however, the surface has a concavo-convex shape. As a result, a portion is always present where the angle formed between the normal vector of the surface and the light source 2a does not equal the angle formed between the normal vector of the surface and the light source 2b, and consequently, the luminance value $Ia(x,y)$ # the luminance value $Ib(x,y)$, that is, the luminance value $I\_diff(x,y)$ # 0. Consequently, by generating the difference image $I\_diff$ between the two two-dimensional images using the subtractor 11, an image of the scale or the harmless pattern that is sound and not a surface defect can be removed.

The following describes logic for detecting the concavo-convex surface defect from the difference image $I\_diff$. Parts (a) and (b) in FIG. 14 depict diagrams illustrating shades and shadows when the illumination light is emitted from either of the light sources to the inspection target portion in cases where the surface shape of an inspection target portion is concave and convex, respectively. As illustrated in (a) of FIG. 14, if the surface shape of the inspection target portion is concave, the near side of the light source is darker due to reduction in light quantity of the illumination light, and the far side of light source is brighter because of being closer to a specular reflection direction. In contrast, as illustrated in (b) of FIG. 14, if the surface shape of the inspection target portion is convex, the near side of the light source is brighter because of being closer to a specular reflection direction, and the far side of light source is darker because of being shaded by the convex shape.

That is, the brightness pattern of the reflected light beam of the illumination light beam differs between the case where the surface shape of the inspection target portion is concave and the case where the surface shape thereof is convex. Therefore, presence or absence of a concavo-convex surface defect can be detected by recognizing the brightness pattern of the reflected light beam. Thus, the following describes a method for detecting a concavo-convex surface defect by recognizing the brightness pattern of the reflected light beam. Hereinafter, of concavo-convex surface defects, a concave surface defect is detected. However, a convex surface defect can be detected using the same logic. A bright portion to be mentioned below refers to a blob that is obtained by performing connection processing of pixels having luminance of a predetermined threshold or higher in the difference image I_diff and that has an area equal to or larger than a predetermined value. A dark portion to be mentioned below refers to a blob that is obtained by performing the connection processing of pixels having luminance of a predetermined threshold or lower in the difference image I_diff and that has an area equal to or larger than a predetermined value. The blob refers to a collection of labeled pixels.

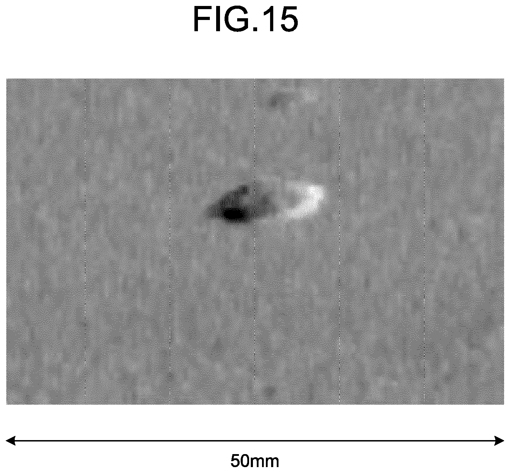

In the present embodiment, the brightness pattern is recognized by extracting the bright portion and the dark portion by performing threshold processing. Specifically, in the surface defect detection device 1 of the present embodiment, the light sources 2a and 2b are right-left symmetrically arranged with respect to the normal vector of the inspection target portion, and consequently, the brightness pattern of the reflected light resulting from the concavo-convex shape of the surface is generated in the right-left direction. The right and the left of the bright/dark contrast are reversed according to the order of the difference processing. Thus, herein, the surface shape is assumed to be concave if the right side is bright and the left side is dark, and is assumed to be convex if the right side is dark and the left side is bright. Consequently, the difference image I_diff of a concave surface defect is as illustrated in FIG. 15. When images of the bright and the dark portions are binarized using luminance thresholds The and -The, binarized images I_blight and I_dark of the bright and the dark portions, respectively, are represented by Expression (5) given below.

$$
\left.\begin{array}{l}
I\_blight(x, y) = 1\,(\text{when I\_diff}(x, y) \geq \text{The}) \\
I\_blight(x, y) = 0\,(\text{when I\_diff}(x, y) < \text{The}) \\
I\_dark(x, y) = 1\,(\text{when I\_diff}(x, y) \leq \text{-The}) \\
I\_dark(x, y) = 0\,(\text{when I\_diff}(x, y) > \text{-The})
\end{array}\right\} \qquad (5)
$$

The images of the bright and the dark portions are binarized in this manner, and are subjected to connection and isolated point removal as needed. Then, the positional relation between the bright and the dark portions is calculated to detect the presence or absence of a concavo-convex surface defect. Various methods are available as a method for calculating the positional relation between the bright and the dark portions. The following describes three representative calculation methods, but other calculation methods may be used as long as the other methods are capable of calculating the positional relation between the bright and the dark portions.

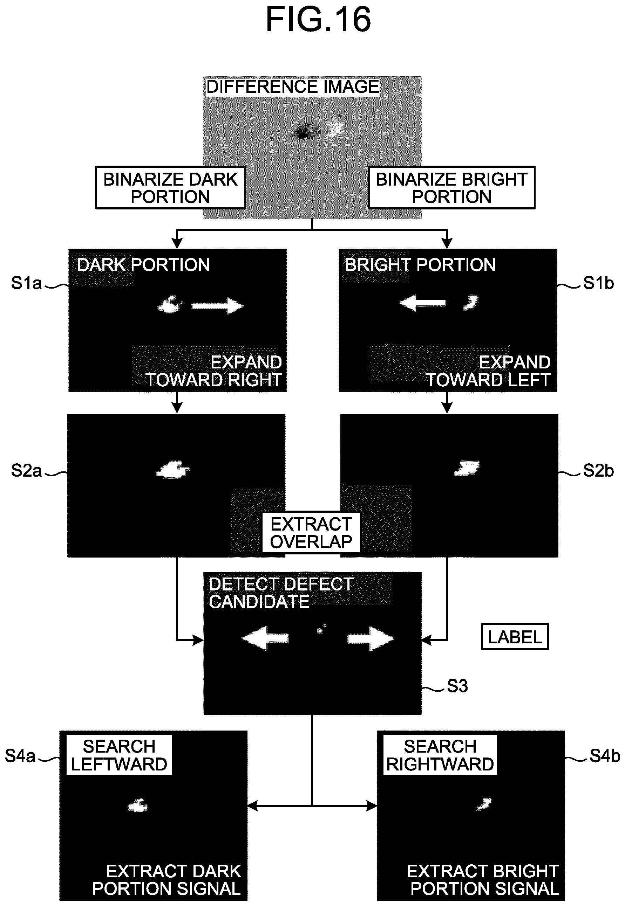

A first positional relation calculation method is a method for calculating the positional relation between the bright and the dark portions by applying expansion processing in a certain direction to the bright and the dark portions. FIG. 16 illustrates the flowchart of this calculation method. Since a concave surface defect is detected in the present embodiment, a case will be described where a brightness pattern with the right side being bright and the left side being dark is recognized. The expression "the right side being bright and the left side being dark" means that the dark portion is always present on the left side of the bright portion, and the bright portion is always present on the right side of the dark portion. Hence, in this calculation method, first, the image processing device 5 applies the expansion processing in the rightward direction to the dark portion, and applies the expansion processing in the leftward direction to the bright portion (Steps S1a and S1b). Let I_blight_extend and I_dark_extend denote images of the bright and the dark portions, respectively, and W denote an expansion length, then the expansion processing is expressed by Expression (6) given below. In Expression (6), assuming the upper left corner of the two-dimensional image to be the origin, the downward direction is assumed to be positive in the y-axis direction, and the rightward direction is assumed to be positive in the x-axis direction.

$$
\begin{array}{ll}
I\_blight\_extend(x1, y) = 1 & x - W \leq x1 \leq x\,(\text{when } I\_blight(x, y) = 1) \\
I\_dark\_extend(x1, y) = 1 & x \leq x1 \leq x + W\,(\text{when } I\_dark(x, y) = 1)
\end{array}
$$

$$(6)$$

In the present embodiment, the bright and the dark portions are expanded by the same length W. The expansion length W, however, need not be the same for both the bright and the dark portions. As an extreme case, the expansion processing may be applied to only one of the bright and the dark portions. The expansion length W also depends on the size of the surface defect desired to be detected.

Then, the image processing device 5 performs AND processing on the images I_blight_extend and I_dark_extend of the bright and the dark portions that have been subjected to the expansion processing as represented by Expression (7) given below, and thereby extracts, as a defect candidate portion image I_defect, an overlapping portion between the images I_blight_extend and I_dark_extend of the bright and the dark portions that have been subjected to the expansion processing (Steps S2a and S2b) .

$$I \_ defect = I \_ blight \_ extend \ \& \ I \_ dark \_ extend \quad (7)$$

Then, after applying the connection and isolated point removal processing as needed to each of the obtained defect candidate portion images I_defect, the image processing device 5 performs labeling processing to generate a defect candidate blob I_defect_blob (Step S3). The image processing device 5 extracts feature quantities of each of the defect candidate blobs I_defect_blob, and determines, on the basis of the extracted results, whether each of the defect candidate blobs I_defect_blob is a concave surface defect (Steps S4a and S4b). Since information on the bright and the dark portions is needed to investigate the feature quantities of the defect candidate blob I_defect_blob, the bright and the dark portions are restored from the defect candidate blob I_defect_blob.

Specifically, a bright portion is always present on the right side of a defect candidate portion, and a dark portion is always present on the left side thereof. Hence, the image processing device 5 searches the defect candidate blob I_defect_blob starting from the centroid thereof toward the left side thereof for the dark portion binarized image I_dark, and regards the first found blob as a dark portion defect candidate blob I_dark_blob. In the same manner, the image processing device 5 searches the defect candidate blob I_defect_blob starting from the centroid thereof toward the right side thereof for the bright portion binarized image I_blight, and regards the first found blob as a bright portion defect candidate blob I_blight_blob. The image processing device 5 extracts feature quantities from the bright portion defect candidate blob I_blight_blob and the dark portion defect candidate blob I_dark_blob that have been restored as described above, and determines, on the basis of the extracted feature quantities, whether each of the defect candidate blobs I_defect_blob is a concave surface defect. Specific feature quantities differ depending on the defect, and thus will not be described here, but one example will be given in an example to be described later.

In a second positional relation calculation method, after the above-described threshold processing is performed and the connection and isolated point removal processing is performed as needed, the bright and the dark portions are extracted and subjected to labeling, and the positional relation between the bright and the dark portions is recognized so as to detect the concave surface defect. Specifically, first, the image processing device 5 individually recognizes the bright and the dark portions by the labeling, and obtains centroid information on the bright and the dark portions. The image processing device 5 then determines, on the basis of the centroid information on the bright and the dark portions, whether the centroid of the dark portion is present in a predetermined range on the right side of each bright portion. If the centroid of the dark portion is present, the image processing device 5 recognizes a combination of the bright and the dark portions forming a pair as a brightness pattern, and performs a feature quantity analysis of the brightness pattern to determine whether the brightness pattern is a concave surface defect. Although the brightness pattern is recognized using the centroid information here, the information used for the recognition of the brightness pattern need not be the centroid information as long as the positions of the bright and the dark portions can be obtained using the information (such as upper end positions or lower end positions thereof).

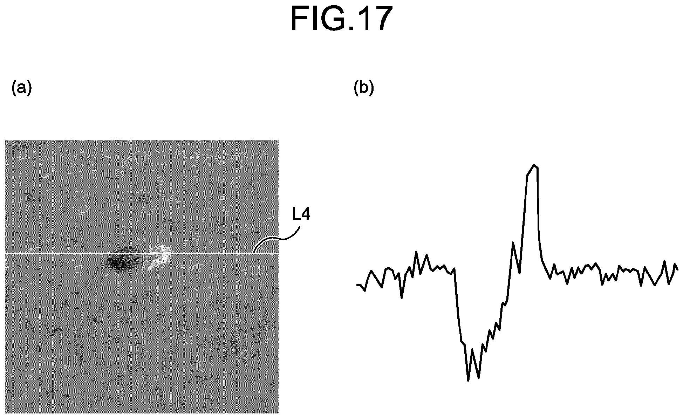

In a third positional relation calculation method, the concave surface defect is detected by recognizing the brightness pattern using a filter without performing the above-described threshold processing. Specifically, in the surface defect detection device 1 illustrated in FIG. 1, since the light sources 2a and 2b are right-left symmetrically arranged with respect to the normal line of the inspection target portion, the brightness pattern resulting from concavity and convexity of the surface is generated in the right-left direction. FIGS. 17(a) and 17(b) are diagrams respectively illustrating an example of a difference image and a one-dimensional profile of a brightness pattern on a line segment L4 illustrated in FIG. 17(a).

As illustrated in FIGS. 17(a) and 17(b), since the right side is bright and the left side is dark in the concave surface defect, the one-dimensional profile of the brightness pattern is a characteristic one-dimensional profile in which the right side is chevron-shaped and the left side is valley-shaped. Hence, in the present embodiment, a filter H with the right side being chevron-shaped and the left side being valley-shaped is generated in advance, and the filter H is applied to the difference image I_diff as represented by Expression (8) below so as to generate a two-dimensional image I_cont in which high-frequency noise is reduced and only the brightness pattern is emphasized.

$$I \_ cont = H \ * \ I \_ diff \quad (8)$$

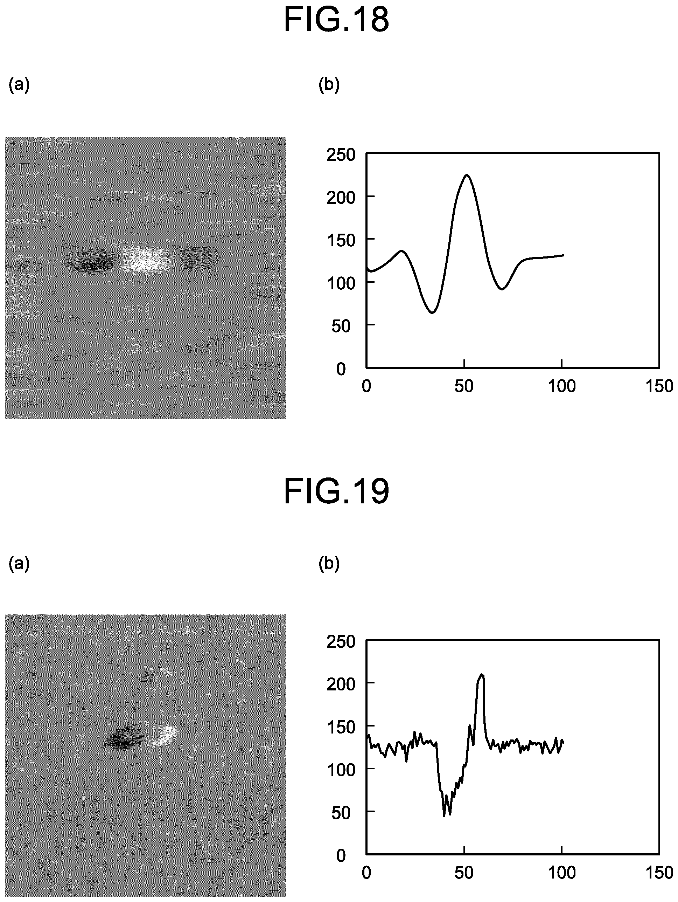

FIGS. 18(a) and 18(b) are diagrams respectively illustrating an example of a two-dimensional image of the filter H generated in advance and a one-dimensional profile in the right-left direction thereof. FIGS. 19(a) and 19(b) are diagrams respectively illustrating an example of a difference image having been subjected to filtering using the filter H illustrated in FIGS. 18(a) and 18(b), and a one-dimensional profile in the right-left direction thereof. As illustrated in FIGS. 19(a) and 19(b), it is found that a two-dimensional image is obtained in which high-frequency noise is reduced and only the brightness pattern is emphasized.

As needed, several types of filters having different ranges in the width direction may be prepared in advance so as to be compatible with many surface defect sizes. The image processing device 5 applies, as needed, the connection and isolated point removal processing to the two-dimensional image in which the brightness pattern is emphasized as described above, and then, extracts the defect candidate portion image I_defect by performing the threshold processing. The image processing device 5 detects the concave surface defect by applying the same processing as that of the first positional relation calculation method to the extracted defect candidate portion image I_defect.

As is clear from the description above, in the surface defect detection processing serving as the second embodiment of the present invention, the two distinguishable light sources 2a and 2b are used to emit the illumination light beams L at substantially the same angle of incidence from different directions to the same inspection target portion; the images formed by the reflected light beams of the respective illumination light beams L are acquired; the bright portion and dark portion of the image obtained by performing the difference processing between the acquired images are extracted; and the presence or absence of the concavo-convex surface defect is determined on the basis of the positional relation between the bright portion and the dark portion thus extracted and the irradiation directions of the illumination light beams L. As a result, the scale or the harmless pattern can be accurately distinguished from the concavo-convex surface defect.

In the present embodiment, the right-left brightness pattern is recognized because the light sources are right-left symmetrically arranged. However, even if the arrangement is not right-left symmetric, but upper-lower symmetric or not symmetric, the concavo-convex surface defect can be detected by the same processing. Specifically, if the light sources are upper-lower symmetrically arranged, the brightness pattern only changes from the right-left direction to the upper-lower direction. Therefore, the same processing can be used to detect the concavo-convex surface defect by rotating the brightness pattern by 90°.

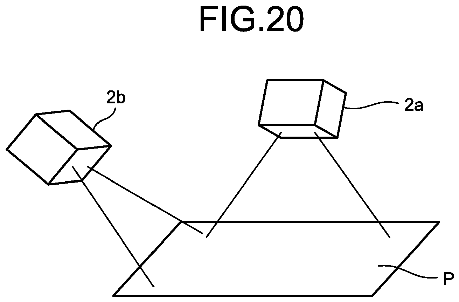

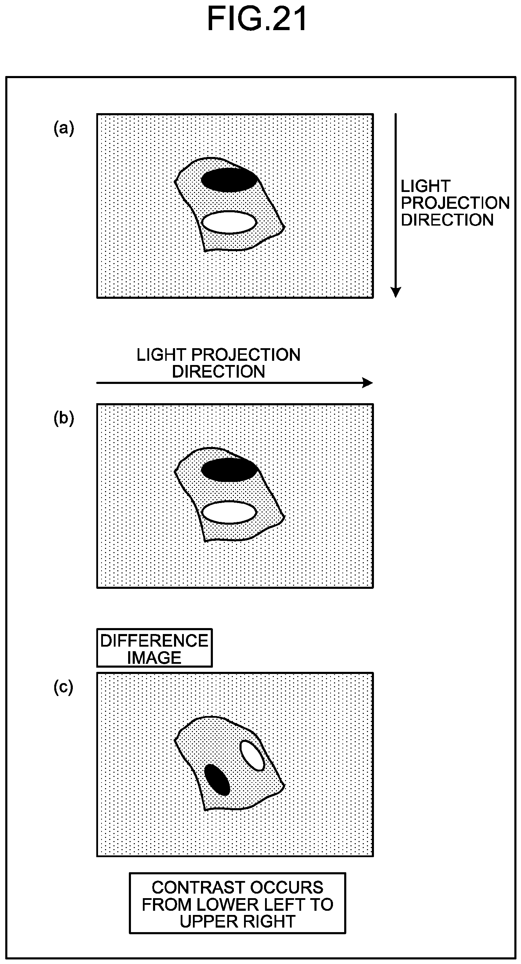

When the light sources 2a and 2b are arranged such that the irradiation directions of the illumination light beams differ from each other by 90° as illustrated in FIG. 20, the near side is darker and the far side is brighter if the surface defect is concave, and the near side is brighter and the far side is darker if the surface defect is convex. Specifically, if the surface defect is concave, the two-dimensional image obtained by the illumination light beam from the light source 2a is as illustrated in (a) of FIG. 21, and the two-dimensional image obtained by the illumination light beam from the light source 2b is as illustrated in (b) of FIG. 21. Due to this, the difference image has a brightness pattern with a contrast in a direction from the lower left to the upper right, as illustrated in (c) of FIG. 21. Hence, if the brightness pattern is rotated by 45°, the concave surface defect can be detected using the same method as that for the brightness pattern in the right-left direction. In addition, difference images having a plurality of respective patterns can be obtained by using three or more light sources. Thus, accuracy of detection of a surface defect can be further improved.

In the present embodiment, the concavo-convex surface defect is detected in the case where the illumination light beams are emitted from the directions symmetrical with respect to the normal line of the inspection target portion. The irradiation directions of the illumination light beams, however, need not be symmetrical. The surface defect detection processing of the present embodiment is generally applicable to manufacturing lines for steel products regardless of whether they are hot or cold.

[Example]

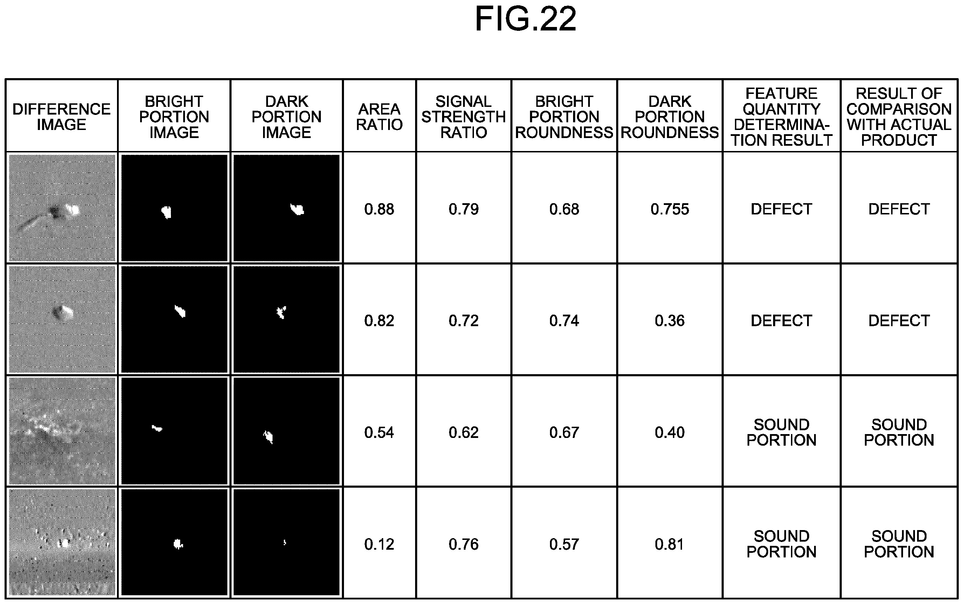

In this example, the surface defect detection processing using the above-described first positional relation calculation method was applied to an inspection target portion where a pit flaw is formed and to a sound inspection target portion where no pit flaw is formed. In this example, a luminance ratio, an area ratio, and degrees of roundness of the bright and the dark portions were calculated as the feature quantities. The degrees of roundness are values obtained by dividing areas of the bright and the dark portions by squares of lengths of circumferences thereof and by normalizing the results, and are used in determining whether shapes of the bright and the dark portions are close to circular shapes. If surface defects are due to the same cause, luminance and areas thereof are unlikely to be significantly different between the right and left signals. Thus, the accuracy of detection of a surface defect is improved by evaluating the right-left balance using the luminance ratio and the area ratio. Since shades and shadows are evaluated, the bright and the dark portions are hardly circular, so that those having nearly circular shapes can be determined to be due to a different cause. Therefore, the degrees of roundness were included in the feature quantities. The areas of the bright and the dark portions were calculated, and only a surface defect having an area of a predetermined value or larger was made detectable. FIG. 22 illustrates the detection results. As illustrated in FIG. 22, according to this example, a pit flaw and a sound portion where no pit flaw is formed have been found to be accurately distinguishable from each other.

<Angle of incidence of illumination light and detectivity of surface defect>

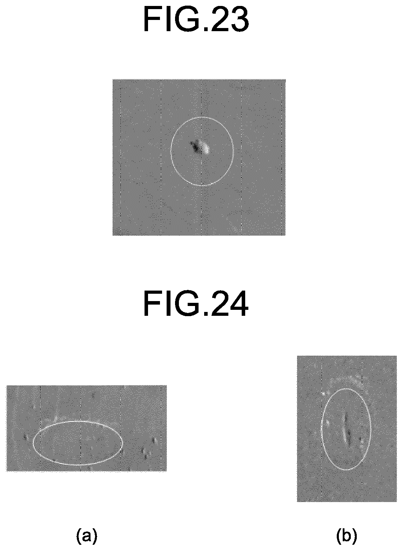

The following describes a study of the angle of incidence of the illumination light and detectivity of a surface defect in the case of detecting the surface defect on a thick steel plate using a surface defect detection method according to the present invention. FIG. 23 is a diagram illustrating a result of detecting a surface defect called a dent flaw using the surface defect detection method according to the present invention. As illustrated in FIG. 23, the dent flaw is found to be surely detectable using a brightness pattern. However, it has been found that, when the illumination light is emitted in the width direction of the thick steel plate, a defect signal of a surface defect called a roll mark can hardly be found because the shape of the roll mark is slender, as illustrated in FIG. 24(a), but, when the illumination light is emitted in the longitudinal direction of the thick steel plate, the strength of the defect signal increases as illustrated in FIG. 24(b).

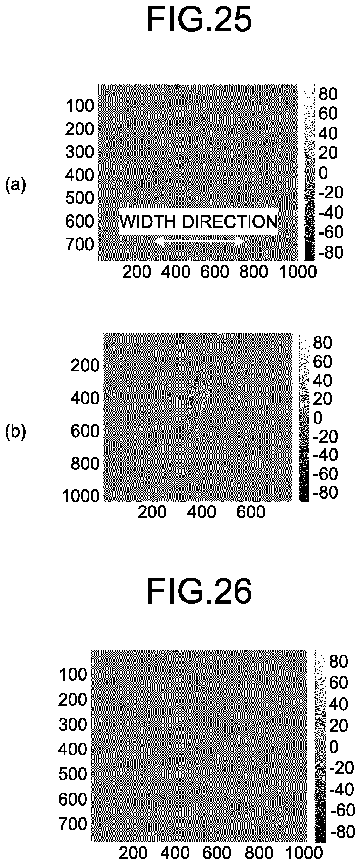

Hence, the inventors of the present invention measured the shape of the surface defect, and calculated the inclination of the surface defect when the illumination light was emitted from the width direction of the thick steel plate and when the illumination light was emitted from the longitudinal direction of the thick steel plate. The inclination as mentioned herein refers to an angle formed between two vectors obtained by orthogonally projecting the normal vector of each surface of the thick steel plate and the normal vector of a reference surface of the thick steel plate to a plane formed by the light source, the area sensor, and the inspection target position. FIGS. 25(a) and 25(b) illustrate the calculated results. As illustrated in FIG. 25(a), the inclination of the surface defect was 7° or smaller when the illumination light was emitted from the width direction of the thick steel plate, whereas, as illustrated in FIG. 25(b), the inclination of the surface defect was 20° to 30° when the illumination light was emitted from the longitudinal direction of the thick steel plate. A pattern looking like stripes when the illumination light was emitted from the width direction of the thick steel plate is harmless scale peeling. In addition, the shape of the sound portion was measured in the same manner, and the inclination of the sound portion when the illumination light was emitted from the width direction of the thick steel plate was evaluated. As a result, as illustrated in FIG. 26, the inclination of the sound portion was 3° to 5°, which was comparable with the inclination of the surface defect when the illumination light was emitted from the width direction of the thick steel plate. Therefore, the difference in inclination of the surface defect is considered to affect the detectivity of the surface defect.

The following describes a physical phenomenon related to the detectivity of the surface defect. Hereinafter, a model of an optical system is established to study the physical phenomenon more in detail. The study herein uses a simplified model of the Torrance-Sparrow model serving as one of reflection models in accordance with the physical phenomenon that are widely used in optical simulations (refer to reference literature (Sato et al., "Illumination Distribution from Shadows", IPSJ Journal: Computer Vision and Image Media, Vol. 41, No. SIG 10, Dec. 2000)). Although the optical system should be normally treated as a three-dimensional model, a two-dimensional model will be used below for the sake of simplicity.

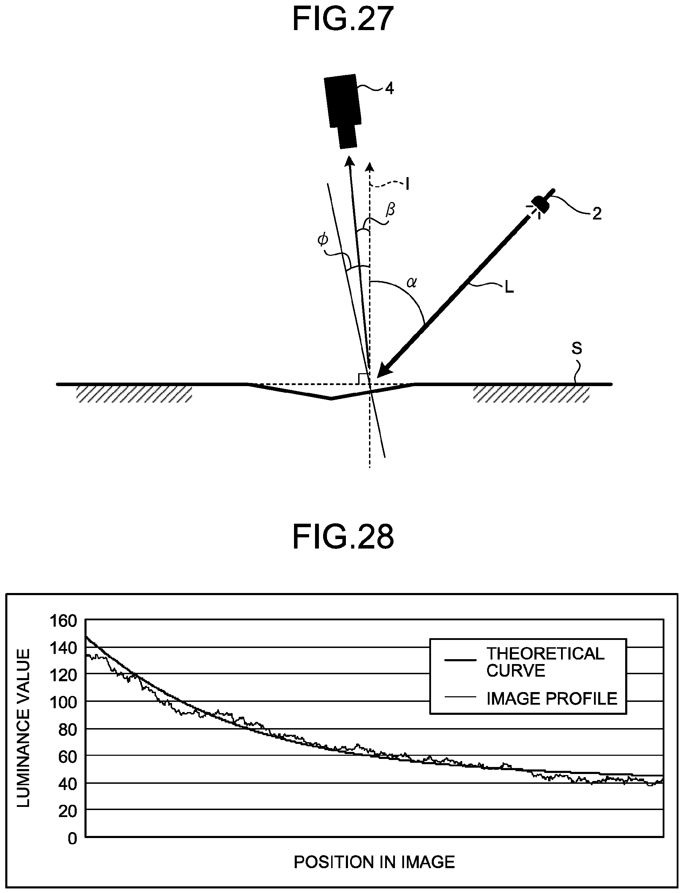

FIG. 27 is a diagram illustrating the configuration of the two-dimensional model of the optical system. As illustrated in FIG. 27, let $\alpha$ denote an angle of incidence of the illumination light beam L from a light source 2 with respect to a steel product surface S (normal vector 1), $\beta$ denote an angle of reflection of the illumination light beam L incident into an area sensor 4, $\phi$ denote an inclination of the inspection target portion as microscopically measured assuming the inclination of the reference surface of the steel product surface S to be 0, $I_0$ denote an incident light quantity of the illumination light beam L from the light source 2 into the inspection target portion, and $k = (K_1, K_2, \sigma)$ denote a parameter (vector quantity) representing the surface characteristics of the inspection target portion, then a light quantity i of the illumination light beam L incident into the area sensor 4 is represented by Expression (9) given below.

$$i = I_0\, R(\alpha,\, \beta,\, \phi,\, \mathbf{k}) \tag{9}$$

R in Expression (9) represents a function for reflection intensity of the illumination light beam L, and is calculated by Expression (10) given below.

$$R(\alpha,\, \beta,\, \phi,\, \mathbf{k}) = K_1 \cos(\alpha - \phi) + K_2\, \frac{1}{\cos(\phi - \beta)}\, e^{\frac{-(\phi - \frac{\alpha+\beta}{2})^2}{2\sigma^2}} \tag{10}$$

The first term in the right-hand member of Expression (10) represents an intensity of diffuse reflection of the illumination light beam L, and the second term thereof represents an intensity of specular reflection of the illumination light beam L. The reflection intensity of the illumination light beam L is represented as the sum of the first and second terms. In the diffuse reflection, the illumination light beam L diffuses in all directions after entering the inspection target portion. In contrast, in the specular reflection, the illumination light beam L is reflected most strongly in the symmetrical direction with respect to the normal vector of the inspection target portion, and the intensity of the illumination light beam L is attenuated in a Gaussian manner as the direction of the light beam departs from the symmetrical direction. The term $k = (K_1, K_2, \sigma)$ is a term resulting from the surface characteristics of the inspection target portion, and determines the degree of spreading of the specular reflection and the intensity ratio between the specular reflection and the diffuse reflection. However, if the angle of incidence $\alpha$ and the inclination $\phi$ satisfy a condition $\pi/2 \leq \alpha + \phi$ or $\alpha + \phi \leq -\pi/2$, the reflection intensity of the illumination light beam L is 0 because the inspection target portion is shaded.

When the strength of an image signal received by the area sensor 4 is expressed using such a two-dimensional model, and illuminance $i_1$ and $i_2$ of a certain point (hereinafter, referred to as a target surface) in an image of the inspection target portion when the illumination light beam is emitted from one (left side) light source and when the illumination light beam is emitted from the other (right side) light source are calculated, the illuminance $i_1$ and $i_2$ are represented by Expressions (11) and (12) given below.

$$i_1 = I_1 \, R(\alpha_1, \beta, \phi, \mathbf{k}) \tag{11}$$

$$i_2 = I_2 \, R(\alpha_2, \beta, \phi, \mathbf{k}) \tag{12}$$

In Expressions (11) and (12), $I_1$ and $I_2$ denote incident light quantities of the illumination light beams L into the target surface; $\alpha_1$ and $\alpha_2$ denote angles of incidence of the illumination light beams into the target position on the target surface; $\beta$ denotes the angle of reflection of the illumination light beam L incident into the area sensor 4; $\phi$ denotes the inclination of the target surface as microscopically measured assuming the inclination of the reference surface of the target surface to be 0; and k denotes the parameter representing the surface characteristics of the target surface.

After the values of the illuminance $i_1$ and $i_2$ are calculated, the shading correction is subsequently applied to the illuminance $i_1$ and $i_2$ to eliminate light quantity unevenness of the light source 2 and unevenness in optical conditions. While various methods are available for the shading correction, the shading correction was applied here using a commonly used method in which a row vector (called a "vertical direction average vector") is created by summing the luminance of respective pixels in the vertical direction and calculating the average luminance, and all rows of the image are subjected to subtraction and division using the vertical direction average vector, and further, signals are multiplied by a constant to be normalized. The same processing was applied to the resultant image for the horizontal direction thereof, and thus, the shading correction was performed. In detail, let $i_{10}$ and $i_{20}$ denote signals in the case where the target surface was a sound portion, and ko denote the surface characteristics of the sound portion, then the signals $i_{10}$ and $i_{20}$ are represented as Expressions (13) and (14) given below.

$$i_{10} = I_1 \, R(\alpha_1, \beta, 0, \mathbf{k}_0) \tag{13}$$

$$i_{20} = I_2 \, R(\alpha_2, \beta, 0, \mathbf{k}_0) \tag{14}$$

Accordingly, luminance values on images after being subjected to the shading correction and the difference image therebetween are represented as Expressions (15) to (17) given below. Expression (15) represents the luminance $i_1$ after the shading correction. Expression (16) represents the luminance $i_2$ after the shading correction. Expression (17) represents the luminance on the difference image.

$$\tilde{i}_1 = \frac{I_1 \, R(\alpha_1, \beta, \phi, \mathbf{k})}{I_1 \, R(\alpha_1, \beta, 0, \mathbf{k}_0)} = \frac{R(\alpha_1, \beta, \phi, \mathbf{k})}{R(\alpha_1, \beta, 0, \mathbf{k}_0)} \tag{15}$$

$$\tilde{i}_2 = \frac{I_2 \, R(\alpha_2, \beta, \phi, \mathbf{k})}{I_2 \, R(\alpha_2, \beta, 0, \mathbf{k}_0)} = \frac{R(\alpha_2, \beta, \phi, \mathbf{k})}{R(\alpha_2, \beta, 0, \mathbf{k}_0)} \tag{16}$$

$$i_d = \tilde{i}_1 - \tilde{i}_2 = \frac{R(\alpha_1, \beta, \phi, \mathbf{k})}{R(\alpha_1, \beta, 0, \mathbf{k}_0)} - \frac{R(\alpha_2, \beta, \phi, \mathbf{k})}{R(\alpha_2, \beta, 0, \mathbf{k}_0)} \tag{17}$$

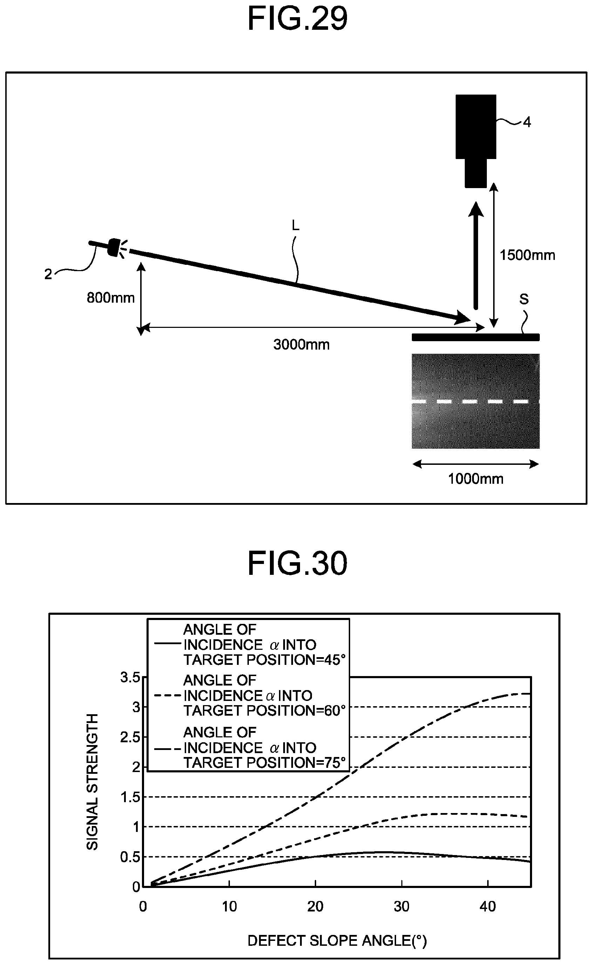

In this study, the above-described model was used to derive an optimal range of the angle of incidence of the illumination light beam from strengths of image signals of the sound portion and the surface defect portion. To start the derivation, first, the parameter representing the surface characteristics of the steel product surface was experimentally obtained. Specifically, an image of a steel product having general surface characteristics was actually photographed, and a luminance profile (image profile) of an actual image signal was fitted with a luminance profile (theoretical curve) of a theoretical image signal obtained by simulating the same optical system. FIG. 28 illustrates the result of the fitting, and FIG. 29 illustrates the configuration of the optical system used in the experiment. As a result, the parameter representing the surface characteristics of the steel product surface was obtained as $k = (K_1, K_2, \sigma) = (1000, 200, 0.21)$.

Then, the obtained parameter k representing the surface characteristics was used to simulate changes in signal strength with a change in slope angle (inclination) of the surface defect when the angle of incidence $\alpha$ of the illumination light was 45°, 60°, and 75°. For the sake of simplicity, the photographing direction of the area sensor was assumed to be on the normal line of the reference surface, that is, $\beta = 0$, the illumination light beams were assumed to be emitted from right and left symmetrical positions, and the parameters representing the surface characteristics of the surface defect portion and the sound portion were assumed to be the same to each other. A contributing term in this surface defect detection processing is the inclination of the steel product surface. FIG. 30 is a diagram illustrating the changes in signal strength with the change in slope angle of the surface defect when the angle of incidence $\alpha$ of the illumination light into the defect position is 45°, 60°, and 75°. As illustrated in FIG. 30, the signal strength increases as the slope angle of the surface defect increases. That is, if the illumination light is emitted from the width direction of the thick steel plate, that is, from the width direction with respect to the roll mark, the signal strength does not greatly differ from that of the surface characteristics because the inclination of the surface defect portion is equal to the inclination of the surface characteristics. In contrast, if the illumination light is emitted from the longitudinal direction of the thick steel plate, the signal strength is larger because the inclination of the surface defect portion is larger than the inclination of the sound portion, and thus, the surface defect can be detected.

Although this example is an example of a surface defect that is long in the width direction of the thick steel plate, a surface defect that is long in the longitudinal direction of the thick steel plate is present in the same manner. Therefore, to prevent surface defects from being missed and to detect all surface defects, the illumination light needs to emitted from two directions of the width and longitudinal directions of the thick steel plate. Since a surface defect that is long in an oblique direction is also present, the overlooking also occurs if the illumination light is simply emitted from an oblique direction. Therefore, also in this case, the illumination light needs to be emitted from two directions of the width and longitudinal directions of the thick steel plate.

<inspection range and noise factor of surface defect>

Finally, an inspection range and a noise factor of a surface defect will be studied. The present invention is characterized in acquiring the difference image by emitting the illumination light from two different directions to the inspection target portion. In the following description, conditions of the optical system will be studied by way of an example for the sake of simplicity in which the illumination light is emitted from mutually symmetrical oblique directions with respect to the normal vector of the steel product surface. In this case, conditions for incidence and reflection of the illumination light are preferably the same between when the illumination light is emitted from one of the light sources (for convenience, emitted from the right direction) and when the illumination light is emitted from the other of the light sources (for convenience, emitted from the left direction).

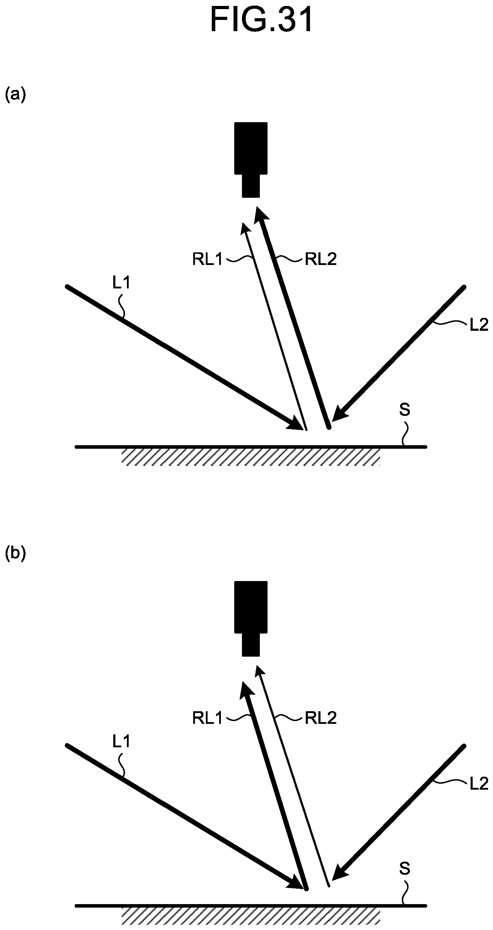

The expression "conditions are the same" as mentioned herein means that the angle of incidence and the angle of reflection of the illumination light are the same in a plane without concavity and convexity. The reason why the conditions are preferably the same is because, if the angle of incidence and the angle of reflection of the illumination light are different between the left direction and the right direction, variations in the surface characteristics, such as specularity and diffusivity, directly serve as a noise factor, and detection of the surface defect is hindered. FIGS. 31(a) and 31(b) illustrate examples in which the present invention is applied to the thick steel plate. FIG. 31(a) illustrates a reflection model of the illumination light on the sound portion surface. FIG. 31(b) illustrates a reflection model of the illumination light on a highly diffusive surface. In FIGS. 31(a) and 31(b), the thickness of lines represents the light quantity of the illumination light.

As illustrated in FIGS. 31(a) and 31(b), if the irradiation of the illumination light is unbalanced between the left direction and the right direction on the surface that is more diffusive than the sound portion, the condition of an illumination light beam L2 from the right direction is close to a specular reflection condition, and consequently, the intensity of a reflected light beam RL2 on the highly diffusive surface is lower than the intensity of the reflected light beam RL2 in the sound portion. In contrast, the condition of an illumination light beam L1 from the left direction is close to a diffusive reflection condition, and consequently, the intensity of a reflected light beam RL1 on the highly diffusive surface is higher than the intensity of the reflected light beam RL1 in the sound portion. Due to this, if the shading correction is applied to image signals obtained using signals representing the surface characteristics of the sound portion, the image signals on the highly diffusive surface have different signal strengths from those in the sound portion. The specular reflection condition mentioned above refers to a condition where the light source and the area sensor reside in symmetrical positions with respect to the normal vector of the sound portion surface, that is, a condition where the angle of incidence and the angle of reflection of the illumination light are equal to each other.

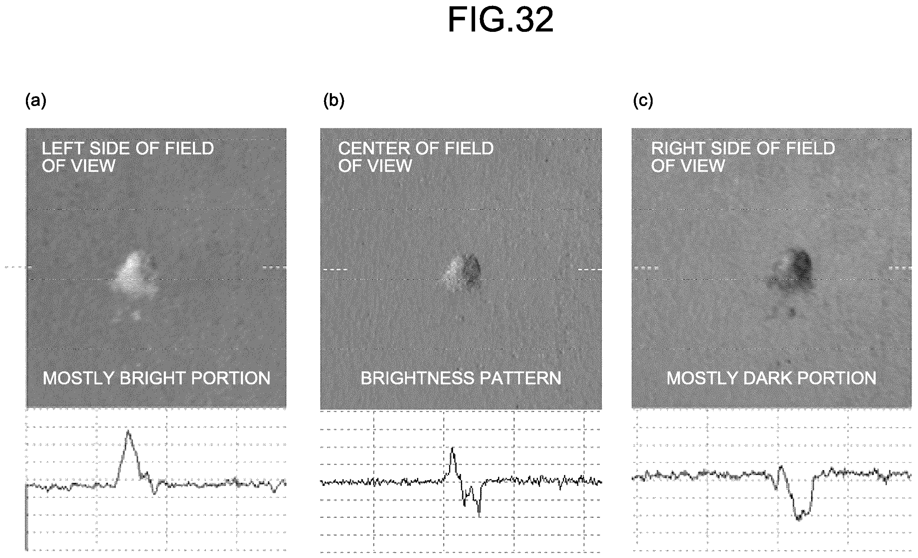

Accordingly, in a difference image obtained between an image obtained when the illumination light is emitted from the right direction and an image obtained when the illumination light is emitted from the left direction, the image signals of the surface defect portion are stronger than those of the same surface portion as the sound portion. Such changes in specularity and diffusivity do not occur in an optical system in which the light sources are right-left symmetrical with respect to the optical axis of the area sensor, that is, at the center of the field of view. Therefore, the imbalance between the right and left projecting/receiving angles of the illumination light is considered to be the noise factor of this method. FIGS. 32(a) to 32(c) illustrate examples of difference images obtained from the thick steel plate. In the examples illustrated in FIGS. 32(a) to 32(c), the appearance of the surface defect varies with the position in the field of view. In the difference image, the left side of the field of view (FIG. 32(a)) is bright as a whole, and the right side thereof (FIG. 32(c)) is dark as a whole. The reason is that the diffusivity of the surface defect portion is high, and therefore, the signal strength is larger than that of the sound portion when the condition is farther from the specular reflection condition. Due to this, although the brightness pattern can be surely seen at the center of the field of view (FIG. 32(b)), an offset in luminance of the image is generated by the diffusivity, so that each end of the field of view includes only the bright portion or the dark portion. Accordingly, the surface defect is difficult to be detected at each end of the field of view because the surface defect is detected using the brightness pattern in the present invention.

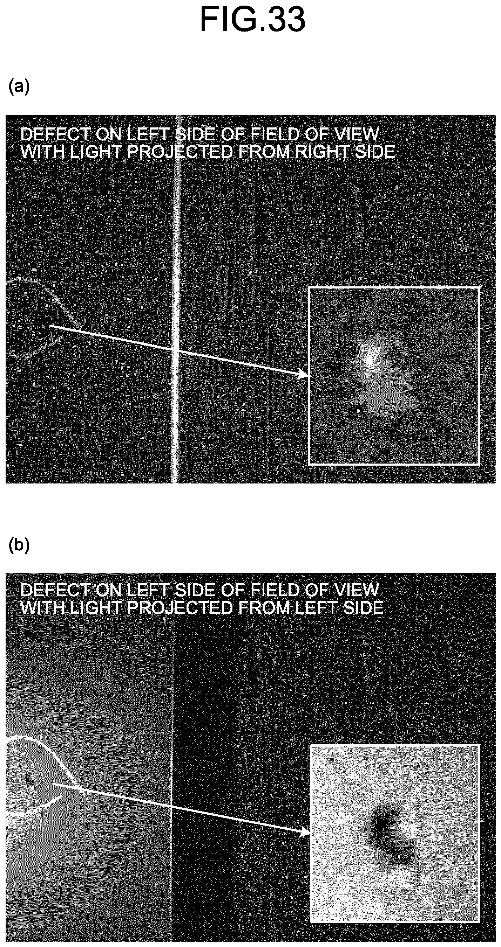

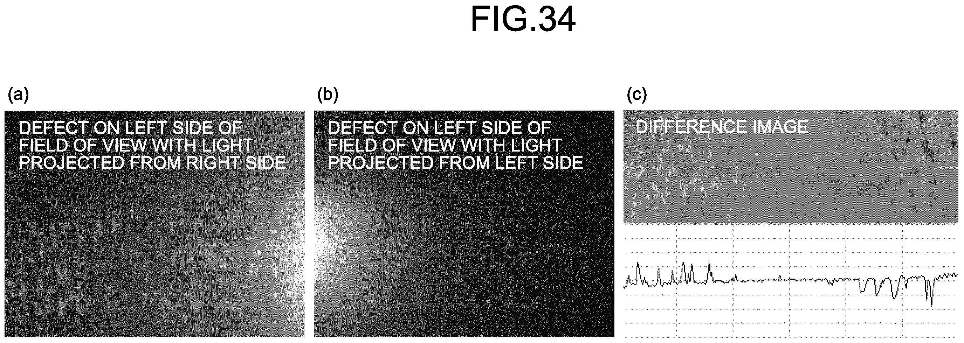

FIGS. 33(a) and 33(b) are diagrams respectively illustrating images obtained when the illumination light is emitted from the right side direction and the left side direction to the thick steel plate with a surface without concavity and convexity to which highly diffusive scale is attached. FIGS. 34(a) to 34(c) are diagrams illustrating an image obtained when the illumination light is emitted from the right side direction, an image obtained when the illumination light is emitted from the left side direction, and a difference image therebetween. In the field of view, when it is irradiated from the left side, the left side in the screen is expressed as the "near side", and the right side in the screen is expressed as the "far side", whereas when it is irradiated from the right side, the left side in the screen is expressed as the "far side", and the right side in the screen is expressed as the "near side".

As illustrated in FIGS. 34(a) to 34(c), in either case of the irradiation from the left direction or the irradiation from the right direction, no difference is present between the scale and the sound portion in the condition close to the specular reflection on the near side, and the scale on the far side is brighter than the sound portion therearound. Consequently, in the difference image obtained between the image obtained when the illumination light is emitted from the right side direction and the image obtained when the illumination light is emitted from the left side direction, the signal is high in the left side direction and low in the right side direction in each scale portion despite of being a flat portion, and a concavo-convex portion is not detectable.

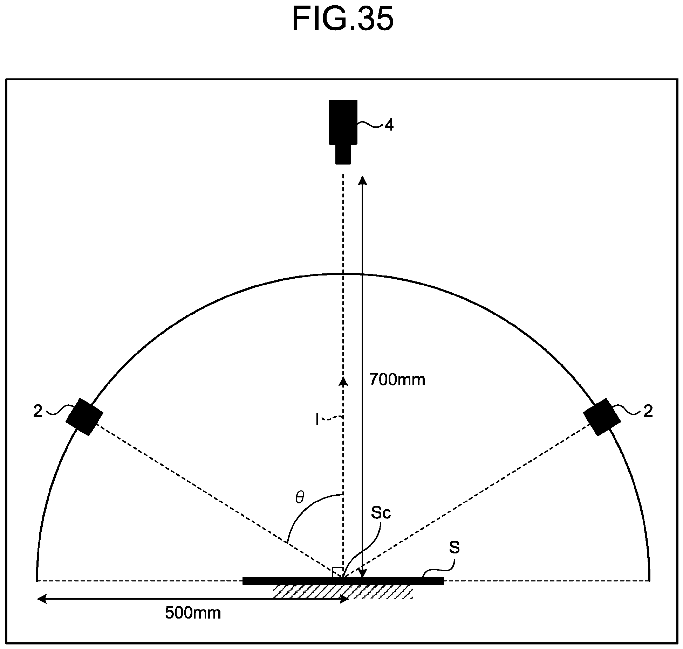

Thus, to quantitatively evaluate the balance between the right and left projecting/receiving angles of the illumination light, a test was conducted using actual test samples. The test samples were selected that have small concavity and convexity and have specularity and diffusivity locally greatly varying due to scale peeling, and noise signals were evaluated in difference images of the test samples in the case where a twin light projection differential system was applied. FIG. 35 illustrates the optical system used in the experiment. As illustrated in FIG. 35, the area sensor 4 was placed such that the normal vector 1 to a center Sc of a test sample S coincides with the optical axis of the area sensor 4. In addition, two light sources 2 were placed in symmetrical positions with respect to the optical axis of the area sensor 4. An angle formed by each of the light sources 2, the center Sc of the test sample S, and the area sensor 4 was assumed to be the angle of incidence $\theta$ of the illumination light from the light source 2, and images were obtained when the illumination light was emitted from the right and left directions at $\theta$ = 30°, 40°, 50°, 60°, 70°, and 80°. Each of the difference images was calculated using two images obtained by emitting the illumination light from the right and left directions at the same angle of incidence $\theta$.

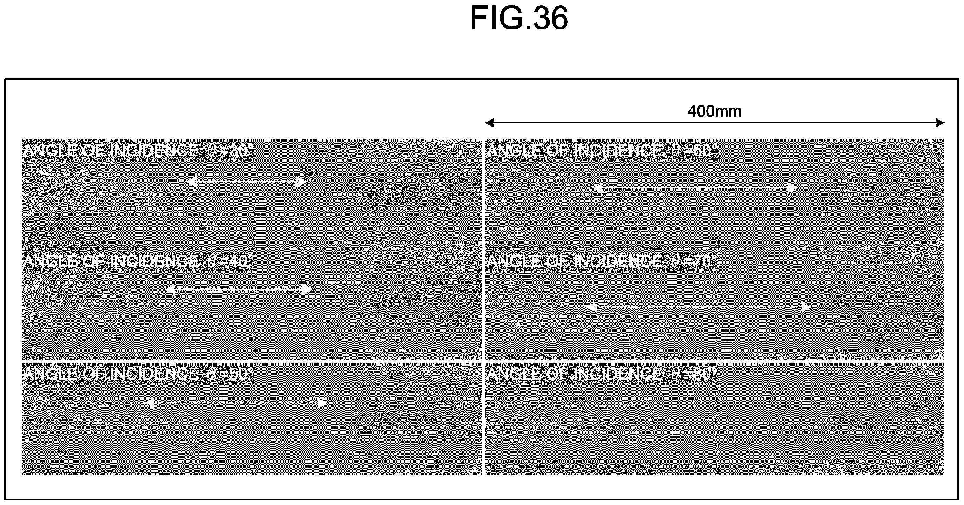

The following describes a method for evaluating the difference images. First, the shading correction is applied to eliminate the light quantity unevenness of each of the difference image. A sound portion corresponding to Expressions (6) and (7) given above was difficult to be calculated from one image. Therefore, a shading correction method was executed by first creating a row vector (called the "vertical direction average vector") by summing the luminance of respective pixels in the vertical direction and calculating the average luminance, then applying subtraction and division to all rows of the image using the vertical direction average vector, and further multiplying the signals by a constant to normalize them. The same processing was applied to the resultant image for the horizontal direction thereof, and thus, the shading correction was performed. FIG. 36 illustrates the results of the thus obtained difference images of the images having been subjected to the shading correction. In FIG. 36, since the test was conducted by laterally arranging two test samples having the same surface characteristics to ensure the field of view, a seam is generated at the center, but that portion is excluded and filled with pixels therearound. As illustrated in FIG. 36, a state could be seen where a range without noise expands as the angle of incidence $\theta$ of the illumination light increases. When the angle of incidence $\theta$ is

70° and 80°, signals resulting from fine concavity and convexity of the surface are emphasized to be a noise factor, thus are difficult to be distinguished from noise resulting from the surface characteristics, and therefore, will be excluded from the following study.

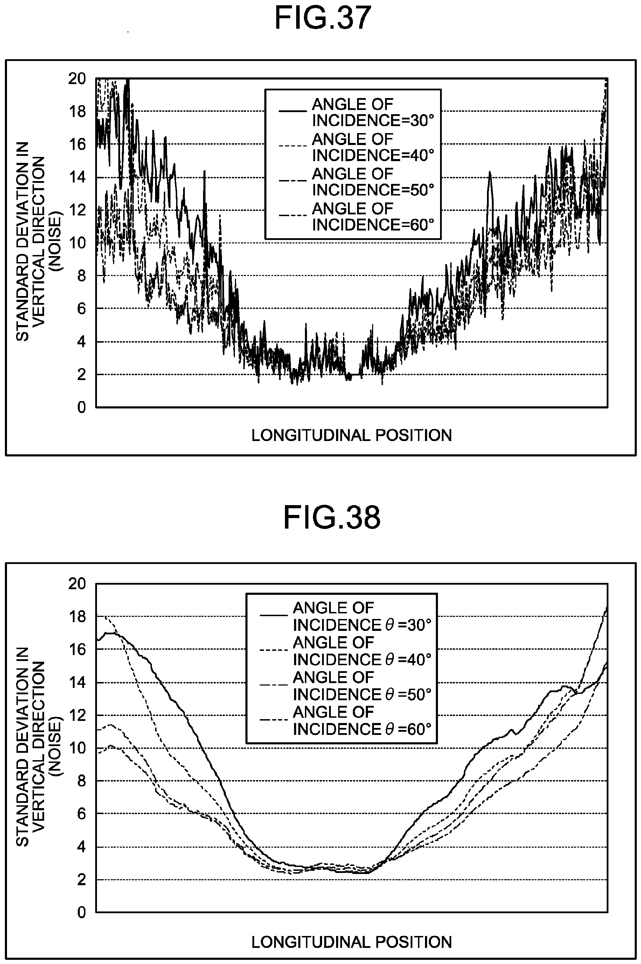

Regarding these results, to quantitatively evaluate the distribution of a noise signal in the width direction, standard deviations of noise signal strengths in the longitudinal direction were calculated. FIG. 37 illustrates the calculated results. As illustrated in FIG. 37, each of the standard deviations of the noise signal strengths increases toward ends in the longitudinal direction. Since variations depending on the position in the width direction were large, moving average filtering was applied to waveforms illustrated in FIG. 37 to smooth the waveforms. As a result, as illustrated in FIG. 38, the standard deviation of the noise signal strength has the smallest value of approximately 2 at the center portion, and the standard deviation of the noise signal strength increases toward the ends. The signal strength of a surface defect to be detected is approximately 15. Therefore, to ensure an S/N ratio of 3 or higher at which detection can be made, the standard deviation of the noise signal strength needs to be 5 or smaller.

Thus, the length of a range in which the standard deviation of the noise signal strength is 5 or smaller was measured, and in addition, conditions for the projecting/receiving angles of the illumination light at both ends of the range and a difference (light projecting/receiving difference) $\Delta\theta$ of the test sample center portion from the optical system were calculated.

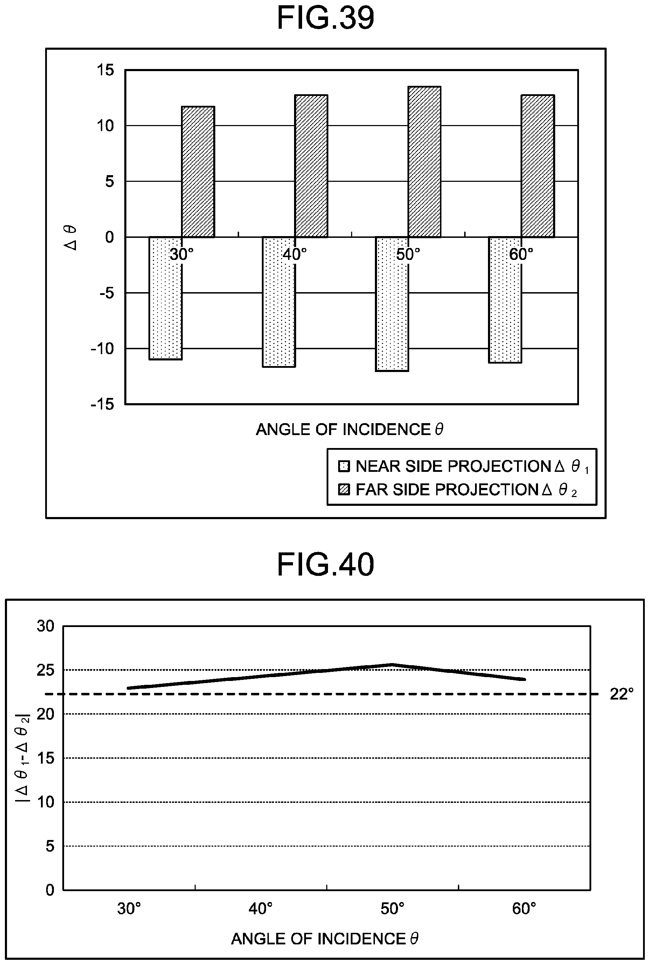

The light projecting/receiving difference $\Delta\theta$ as mentioned herein refers to a value that is represented by Expression (18) given below using the angle of incidence $\alpha$ of the illumination light into the defect position and the angle of reflection $\beta$ in the inspection target portion, and that indicates how the projecting/receiving angles of the illumination light are closer to or farther from the specular reflection direction than in the case where the test sample center Sc is irradiated. The sign is positive in the direction departing from the specular reflection. FIGS. 39 and 40 illustrate the calculated results. FIG. 39 is a diagram illustrating changes in the light projecting/receiving difference $\Delta\theta$ on the near side and the far side with respect to the change in angle of incidence of the illumination light at an end of the range in which the standard deviation of the noise signal strength is 5 or smaller. FIG. 40 is a diagram illustrating a change in the absolute value of the difference between a light projecting/receiving difference $\Delta\theta_1$ on the near side and a light projecting/receiving difference $\Delta\theta_2$ on the far side with respect to the change in angle of incidence of the illumination light at the end of the range in which the standard deviation of the noise signal strength is 5 or smaller.

As illustrated in FIG. 39, at the end of the range in which the standard deviation of the noise signal strength is 5 or smaller, the light projecting/receiving differences $\Delta\theta_1$ and $\Delta\theta_2$ on the near side and the far side change with the angle of incidence of the illumination light. As illustrated in FIG. 40, at the end of the range in which the standard deviation of the noise signal strength is 5 or smaller, the absolute value $|\Delta\theta_1 - \Delta\theta_2|$ of the difference between the light projecting/receiving difference $\Delta\theta_1$ on the near side and the light projecting/receiving difference $\Delta\theta_2$ on the far side is larger than 22° regardless of the angle of incidence of the illumination light. From these results, the standard deviation of the noise signal strength can be said to be 5 or smaller if the absolute value $|\Delta\theta_1 - \Delta\theta_2|$ of the difference between the light projecting/receiving difference $\Delta\theta_1$ on the near side and the light projecting/receiving difference $\Delta\theta_2$ on the far side is 22° or smaller. Therefore, the noise resulting from the surface characteristics is understood to be reduced by performing the surface defect detection processing according to the present invention such that the light emitting angle and the light receiving angle satisfy the above described conditions from the optical system of the center portion of the test sample.

$$\Delta\theta = (\alpha - \theta) + \beta \qquad\qquad (18)$$

While the above-described study has been made using the two-dimensional model, the above-described study will be extended to a three-dimensional model. In this case, let $a_1$ denote a vector representing a specular reflection direction of an illumination light beam incident from one light source of two light sources into an inspection target portion, $b_1$ denote a vector in the inspection target portion representing a reflection direction of the illumination light beam incident from one light source toward the area sensor 4, $a_2$ denote a vector representing a specular reflection direction of an illumination light beam incident from the other light source of the two light sources into the inspection target portion, and $b_2$ denote a vector in the inspection target portion representing a reflection direction of the illumination light beam incident from the other light source toward the area sensor 4, then the vectors $a_1$, $b_1$, $a_2$, and $b_2$ only need to satisfy Expression (1) given below. That is, $\Delta\theta_1$ is represented using the vectors $a_1$ and $b_1$, and $\Delta\theta_2$ is represented using the vectors $a_2$ and $b_2$. Although the steel product is a thick steel plate in the description above, the present invention is also applicable to a thin steel sheet.

$$\left| \arccos\left( \frac{\langle \mathbf{a}_1 \cdot \mathbf{b}_1 \rangle}{\|\mathbf{a}_1\|\|\mathbf{b}_1\|} \right) - \arccos\left( \frac{\langle \mathbf{a}_2 \cdot \mathbf{b}_2 \rangle}{\|\mathbf{a}_2\|\|\mathbf{b}_2\|} \right) \right| \leq 22^\circ \qquad (1)$$

*where $\langle \rangle$ represents an inner product, and $\| \|$ represents a norm.*

If full-width inspection is assumed in the case of detecting the surface defect of the thick steel plate using the surface defect detection method according to the present invention, since the plate width of the thick steel plate is large, the number of area sensors and light sources is large, so high expenses are needed for the inspection. Consider the following two cases. In one case, the illumination light beam is emitted from the width direction of the thick steel plate, and in the other case, the illumination light beam is emitted from the longitudinal direction of the thick steel plate. When an optical system satisfying the condition given by Expression (18) above is designed, if the optical system is to be designed so as to satisfy the condition in the width direction of the thick steel plate, the optical system needs to be designed so as to limit the width directional field of view per one area sensor, and thus, the number of area sensors needs to be increased.

However, the longitudinal directional field of view per one area sensor can be designed in any manner by designing the capturing period in accordance with the moving speed of the thick steel plate. Thus, the optical system is preferably designed so as to satisfy the condition represented by Expression (1) only when the illumination light beam is emitted from the longitudinal direction of the thick steel plate among the two directions of the width direction and the longitudinal direction of the thick steel plate, in other words, only when the irradiation direction of one illumination light beam of illumination light beams emitted from two light sources is parallel to the longitudinal direction of the steel product, and the illumination light beam is preferably supplementarily used when emitted from the width direction of the thick steel plate. Due to this, the inspection can be conducted with an optimal optical system while reducing the cost.

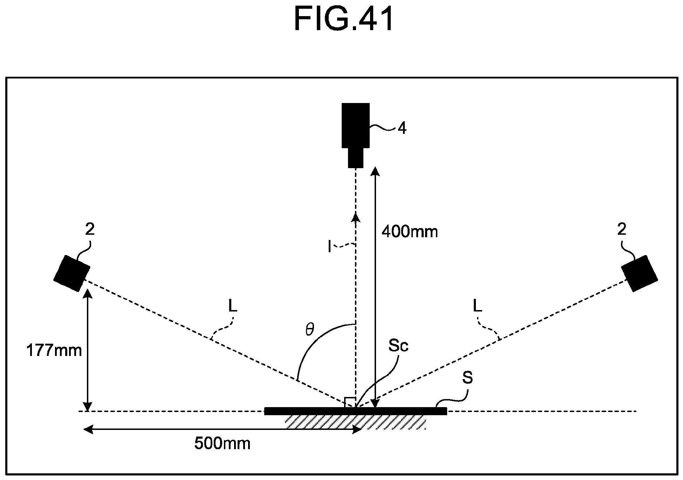

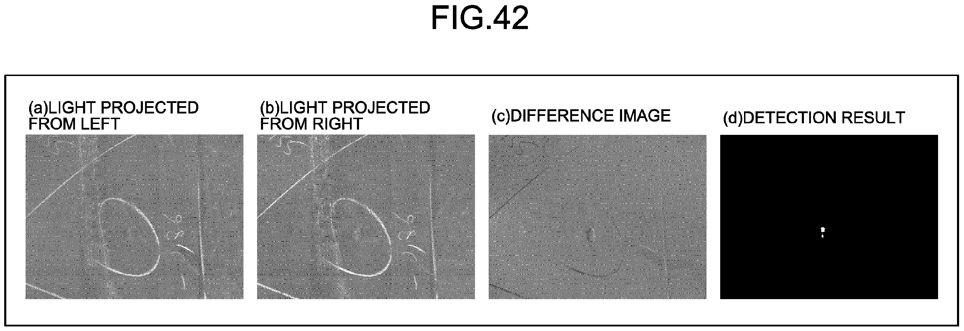

Finally, test results obtained by detecting a surface defect of a thick steel plate using an optical system satisfying the condition represented by Expression (1) will be presented. FIG. 41 is a schematic diagram illustrating the configuration of the optical system used in the experiment. The same elements as those in FIG. 35 are assigned with the same reference signs. The positional relation of the area sensor 4, the two light sources 2, the test sample (thick steel plate) S, and the test sample center Sc is the same as that in FIG. 35. In the optical system illustrated in FIG. 41, the angle of incidence $\theta$ of the illumination light beams is 70°, the resolution of the area sensor was 1.0 mm/pixel, and the inspection range was 350 mm $\times$ 270 mm. FIG. 42 illustrates a detection result of the surface defect. As illustrated in (d) of FIG. 42, it could be found that an image of the surface defect portion has a brightness pattern, and the surface defect is detectable. The detection result of the surface defect represents a portion where a bright portion and a dark portion were expanded and overlapped, where the threshold of the signal strength was set to 15.

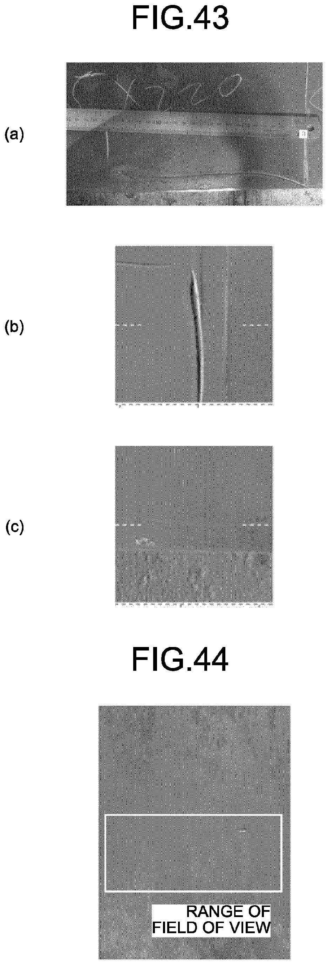

FIGS. 43(a) to 43(c) are diagrams illustrating detection results of a surface defect called a burr-pressed mark that is long in the longitudinal direction. As illustrated in FIG. 43(c), the signal strength was very small when the illumination light was emitted from the longitudinal direction of the thick steel plate. However, as illustrated in FIG. 43(b), the brightness pattern could be surely seen when the illumination light was emitted from the width direction of the thick steel plate. FIG. 44 is a diagram illustrating a result of inspection of a surface defect obtained by reducing the field of view in only the longitudinal direction of a thick steel plate. The inspection target was a steel plate having poor surface characteristics. As illustrated in FIG. 44, it has been found that positions with unevenly balanced projecting/receiving angles of the illumination light serve as a noise factor, and that limiting the inspection range allows the inspection to be conducted in the condition of well-balanced projecting/receiving angles.

While the description has been given of the embodiments to which the invention made by the present inventors is applied, the present invention is not limited to the description and the drawings that constitute a part of the disclosure of the present invention according to the present embodiment. For example, a surface defect of a steel product may be detected using the surface defect detection method according to the present invention, and the steel product may be manufactured on the basis of the detection result. Thus, other embodiments, examples, operational techniques, and the like made by those skilled in the art on the basis of the present embodiment are all included in the scope of the present invention.

Industrial Applicability

The present invention can provide a surface defect detection device and a surface defect detection method that enable accurate distinction of scale or harmless patterns from surface defects. The present invention can also provide a method for manufacturing a steel product, the method enabling the accurate distinction of the scale or the harmless patterns from the surface defects, and enabling manufacturing of the steel product on the basis of the distinction result.

Reference Signs List

1 Surface defect detection device
2a, 2b Light source
3 Function generator
4a, 4b Area sensor
5 Image processing device
6 Monitor
L Illumination light beam
P Steel pipe

**Claims**

1. A surface defect detection device to optically detect a surface defect of a steel product, the surface defect detection device comprising:

   an irradiation unit configured to irradiate a same inspection target portion with illumination light beams from different directions using two or more distinguishable light sources; and
   a detection unit configured to acquire images formed by reflected light beams of the respective illumination light beams, and to detect the surface defect in the inspection target portion by performing difference processing between the acquired images, wherein
   a vector $a_1$, a vector $b_1$, a vector $a_2$, and a vector $b_2$ satisfy Expression (1) given below in the inspection target portion:

$$\left| \arccos\left( \frac{\langle \mathbf{a}_1 \cdot \mathbf{b}_1 \rangle}{\|\mathbf{a}_1\|\|\mathbf{b}_1\|} \right) - \arccos\left( \frac{\langle \mathbf{a}_2 \cdot \mathbf{b}_2 \rangle}{\|\mathbf{a}_2\|\|\mathbf{b}_2\|} \right) \right| \leq 22^{\circ} \tag{1}$$

   where $\langle \rangle$ represents an inner product, $\| \|$ represents a norm,
   $a_1$ denotes a vector representing a specular reflection direction of an illumination light beam incident from one light source of two light sources into the inspection target portion, $b_1$ denotes a vector in the inspection target portion representing a reflection direction of the illumination light beam incident from the one light source toward a photographing unit configured to photograph the images, $a_2$ denotes a vector representing a specular reflection direction of an illumination light beam incident from the other light source of the two light sources into the inspection target portion, and $b_2$ denotes a vector in the inspection target portion representing a reflection direction of the illumination light beam incident from the other light source toward the photographing unit configured to photograph the images.

2. The surface defect detection device according to claim 1, wherein an irradiation direction of one illumination light beam of the illumination light beams emitted from the two light sources is parallel to a longitudinal direction of the steel product.

3. A surface defect detection method to optically detect a surface defect of a steel product, the method comprising:

   an irradiation step of irradiating a same inspection target portion with illumination light beams from different directions using two or more distinguishable light sources; and
   a detection step of acquiring images formed by reflected light beams of the respective illumination light beams, and detecting the surface defect in the inspection target portion by performing difference processing between the acquired images, wherein
   a vector $a_1$, a vector $b_1$, a vector $a_2$, and a vector $b_2$ satisfy Expression (1) given below in the inspection target portion:

$$\left|\arccos\left(\frac{\langle \mathbf{a}_1 \cdot \mathbf{b}_1\rangle}{\|\mathbf{a}_1\|\|\mathbf{b}_1\|}\right) - \arccos\left(\frac{\langle \mathbf{a}_2 \cdot \mathbf{b}_2\rangle}{\|\mathbf{a}_2\|\|\mathbf{b}_2\|}\right)\right| \leq 22^{\circ} \qquad (1)$$

where $\langle\rangle$ represents an inner product, $\|\ \|$ represents a norm,
$a_1$ denotes a vector representing a specular reflection direction of an illumination light beam incident from one light source of two light sources into the inspection target portion, $b_1$ denotes a vector in the inspection target portion representing a reflection direction of the illumination light beam incident from the one light source toward a photographing unit configured to photograph the images, $a_2$ denotes a vector representing a specular reflection direction of an illumination light beam incident from the other light source of the two light sources into the inspection target portion, and $b_2$ denotes a vector in the inspection target portion representing a reflection direction of the illumination light beam incident from the other light source toward the photographing unit configured to photograph the images.

4. The surface defect detection method according to claim 3, wherein an irradiation direction of one illumination light beam of the illumination light beams emitted from the two light sources is parallel to a longitudinal direction of the steel product.

5. The surface defect detection method according to claim 3 or 4, wherein
the irradiation step includes a step of emitting the illumination light beams by repeatedly emitting light from two or more flash light sources such that light emitting times of the flash light sources do not overlap each other, and/or a step of simultaneously emitting illumination light beams of two or more light sources having wavelength ranges not overlapping one another, and
in the case of simultaneously emitting the illumination light beams of the two or more light sources having wavelength ranges not overlapping one another, the detection step includes a step of acquiring the images formed by the reflected light beams of the respective illumination light beams by separating the reflected light beams of the respective mixed illumination light beams using filters configured to transmit light beams having the same wavelengths as wavelengths of the illumination light beams.

6. The surface defect detection method according to any one of claims 3 to 5, wherein the detection step includes a first determination step of extracting a bright portion and a dark portion of an image obtained by performing the difference processing between the acquired images, and determining presence or absence of a concavo-convex surface defect based on a positional relation between the bright portion and the dark portion thus extracted and irradiation directions of the illumination light beams.

7. A method for manufacturing a steel product, the method comprising a step of detecting a surface defect of the steel product using the surface defect detection method as claimed in any one of claims 3 to 6, and manufacturing the steel product based on a result of the detection.

# FIG.1

# FIG.2

# FIG.3

EACH TRIGGER

T

d

(a)AREA SENSOR 4a

(b)LIGHT SOURCE 2a

(c)AREA SENSOR 4b

(d)LIGHT SOURCE 2b

TIME

# FIG.4

4b    4a

2b    2a

P

(a)    (b)    (c)

20mm

-

+

11

DEFECT HAVING CON-CAVITY AND CONVEXITY

SCALE OR HARMLESS PATTERN

# FIG.5

# FIG.6

# FIG.7

# FIG.8

# FIG.9

# FIG.10

(a)

15mm

LUMINANCE
VALUE

DEFECT

CONVEYANCE
DIRECTION

(b)

LUMINANCE
VALUE

DEFECT

CONVEYANCE
DIRECTION

(c)

11

+    -

LUMINANCE
VALUE

DEFECT

CONVEYANCE
DIRECTION

EP 3 315 950 A1

# FIG.11

(a)

LUMINANCE VALUE

CONVEYANCE DIRECTION

(b)

LUMINANCE VALUE

CONVEYANCE DIRECTION

11

(c)

LUMINANCE VALUE

CONVEYANCE DIRECTION

EP 3 315 950 A1

# FIG.12

# FIG.13

# FIG.14

# FIG.15

50mm

# FIG.16

DIFFERENCE IMAGE

BINARIZE DARK PORTION     BINARIZE BRIGHT PORTION

S1a — DARK PORTION     BRIGHT PORTION — S1b

EXPAND TOWARD RIGHT     EXPAND TOWARD LEFT

S2a —     — S2b

EXTRACT OVERLAP

DETECT DEFECT CANDIDATE

LABEL

S3

S4a — SEARCH LEFTWARD     SEARCH RIGHTWARD — S4b

EXTRACT DARK PORTION SIGNAL     EXTRACT BRIGHT PORTION SIGNAL

# FIG.17

(a)

(b)

L4

# FIG.18

(a)

(b)

# FIG.19

(a)

(b)

# FIG.20

# FIG.21

# FIG.22

| DIFFERENCE IMAGE | BRIGHT PORTION IMAGE | DARK PORTION IMAGE | AREA RATIO | SIGNAL STRENGTH RATIO | BRIGHT PORTION ROUNDNESS | DARK PORTION ROUNDNESS | FEATURE QUANTITY DETERMINA-TION RESULT | RESULT OF COMPARISON WITH ACTUAL PRODUCT |
|---|---|---|---|---|---|---|---|---|
| | | | 0.88 | 0.79 | 0.68 | 0.755 | DEFECT | DEFECT |
| | | | 0.82 | 0.72 | 0.74 | 0.36 | DEFECT | DEFECT |
| | | | 0.54 | 0.62 | 0.67 | 0.40 | SOUND PORTION | SOUND PORTION |
| | | | 0.12 | 0.76 | 0.57 | 0.81 | SOUND PORTION | SOUND PORTION |

# FIG.23

# FIG.24

(a)                                        (b)

# FIG.25

(a)

(b)

# FIG.26

# FIG.27

# FIG.28

POSITION IN IMAGE

# FIG.29

# FIG.30

# FIG.31

(a)

(b)

FIG.32

# FIG.33

(a)

DEFECT ON LEFT SIDE OF FIELD OF VIEW
WITH LIGHT PROJECTED FROM RIGHT SIDE

(b)

DEFECT ON LEFT SIDE OF FIELD OF VIEW
WITH LIGHT PROJECTED FROM LEFT SIDE

# FIG.34

# FIG.35

# FIG.36

ANGLE OF INCIDENCE θ=30°

ANGLE OF INCIDENCE θ=60°

ANGLE OF INCIDENCE θ=40°

ANGLE OF INCIDENCE θ=70°

ANGLE OF INCIDENCE θ=50°

ANGLE OF INCIDENCE θ=80°

400mm

EP 3 315 950 A1

# FIG.37

# FIG.38

# FIG.39

# FIG.40

# FIG.41

# FIG.42

(a)LIGHT PROJECTED FROM LEFT  (b)LIGHT PROJECTED FROM RIGHT  (c)DIFFERENCE IMAGE  (d)DETECTION RESULT

# FIG.43

(a)

(b)

(c)

# FIG.44

RANGE OF
FIELD OF VIEW

**EP 3 315 950 A1**

## INTERNATIONAL SEARCH REPORT

| International application No. |
|---|
| PCT/JP2016/068459 |

**A. CLASSIFICATION OF SUBJECT MATTER**
*G01N21/892(2006.01)i*

According to International Patent Classification (IPC) or to both national classification and IPC

**B. FIELDS SEARCHED**

Minimum documentation searched (classification system followed by classification symbols)
G01N21/84-21/958, G01B11/00-11/30

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2010-223621 A (Sumitomo Metal Industries, Ltd.),<br>07 October 2010 (07.10.2010),<br>claim 1; paragraphs [0002], [0023] to [0047];<br>fig. 3 to 5<br>(Family: none) | 1-7<br>5-7 |
| Y | JP 59-52735 A (Kawasaki Steel Corp.),<br>27 March 1984 (27.03.1984),<br>page 2, lower left column, line 3 to page 4,<br>upper left column, line 20; fig. 1<br>(Family: none) | 5-7 |
| A | JP 2016-35405 A (Ricoh Elemex Corp. et al.),<br>17 March 2016 (17.03.2016),<br>(Family: none) | 1-7 |

| ☒ Further documents are listed in the continuation of Box C. | ☐ See patent family annex. |
|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 August 2016 (31.08.16) | 13 September 2016 (13.09.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

53

**INTERNATIONAL SEARCH REPORT**

International application No.

PCT/JP2016/068459

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2015-129715 A  (Ricoh Elemex Corp.), 16 July 2015 (16.07.2015), (Family: none) | 1-7 |
| A | JP 2011-117788 A  (Sumitomo Mitsui Construction Co., Ltd.), 16 June 2011 (16.06.2011), (Family: none) | 1-7 |

Form PCT/ISA/210 (continuation of second sheet) (January 2015)

## REFERENCES CITED IN THE DESCRIPTION

**Patent documents cited in the description**

- JP 11037949 A

- JP 59052735 A

**Non-patent literature cited in the description**

- **SATO et al.** Illumination Distribution from Shadows. *IPSJ Journal: Computer Vision and Image Media,* December 2000, vol. 41 (SIG 10